(19) Europäisches Patentamt
European Patent Office
Office européen des brevets

(11) **EP 4 625 011 A1**

(12) **EUROPEAN PATENT APPLICATION**
published in accordance with Art. 153(4) EPC

(43) Date of publication:
**01.10.2025 Bulletin 2025/40**

(21) Application number: **22967650.7**

(22) Date of filing: **09.12.2022**

(51) International Patent Classification (IPC):
**G02B 6/35** $^{(2006.01)}$    **G02B 6/34** $^{(2006.01)}$
**G02B 6/293** $^{(2006.01)}$

(52) Cooperative Patent Classification (CPC):
**G02B 6/34; G02B 6/35;** G02B 6/293

(86) International application number:
**PCT/CN2022/138066**

(87) International publication number:
**WO 2024/119502 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **WU, Yangbo**
**Shenzhen, Guangdong**
**518129 (CN)**
• **ZHAO, Wei**
**Shenzhen, Guangdong**
**518129 (CN)**

• **PENG, Xing**
**Shenzhen, Guangdong**
**518129 (CN)**
• **QIN, Yang**
**Shenzhen, Guangdong**
**518129 (CN)**
• **NIE, Gaowei**
**Shenzhen, Guangdong**
**518129 (CN)**
• **LI, Liang**
**Shenzhen, Guangdong**
**518129 (CN)**

(74) Representative: **Maiwald GmbH**
**Engineering**
**Elisenhof**
**Elisenstrasse 3**
**80335 München (DE)**

(54) **ARRAYED WAVEGUIDE GRATING, LIGHT EMITTING DEVICE, LIGHT RECEIVING DEVICE AND OPTICAL COMMUNICATION SYSTEM**

(57)     An arrayed waveguide grating (50), an optical transmitting apparatus (20), an optical receiving apparatus (40), and an optical communication system (10) are provided. The arrayed waveguide grating (50) includes m first waveguides (501), a first coupler (502), k second waveguides (503), a second coupler (504), and n third waveguides (505), where m, n, and k are all positive integers, and lengths of the k second waveguides (503) sequentially increase. The first waveguide (501) is configured to transmit a first optical signal to the first coupler (502). The first coupler (502) is configured to generate k second optical signals based on the first optical signal. The second waveguide (503) is configured to transmit the second optical signal to a first phase shift structure (506). The first phase shift structure (506) is configured to adjust an amplitude of one or more optical signals with different wavelengths in the second optical signal to generate a third optical signal. The second coupler (504) is configured to generate n fourth optical signals based on the third optical signal. The third waveguide (505) is configured to output the fourth optical signal. The optical transmitting apparatus (20), the optical receiving apparatus (40), and the optical communication system (10) that include the arrayed waveguide grating (50) are further provided.

FIG. 7

EP 4 625 011 A1

## Description

## TECHNICAL FIELD

Embodiments of this application relate to the field of optical communication technologies, and in particular, to an arrayed waveguide grating, an optical transmitting apparatus, an optical receiving apparatus, and an optical communication system.

## BACKGROUND

An optical communication system is a mainstream communication system at present. The optical communication system usually uses a wavelength division multiplexing (wavelength division multiplexing, WDM) technology to transmit an optical signal. In an optical transmitting apparatus of the optical communication system, a plurality of optical signals with different wavelengths may be multiplexed by using the WDM technology, to transmit a multiplexed signal in one optical fiber. An optical receiving apparatus of the optical communication system demultiplexes optical signals with different wavelengths in an optical signal transmitted in one optical fiber, and transmits an optical signal with a predetermined wavelength to a predetermined optical receiver, to implement communication. Using the WDM technology can increase a communication capacity and a communication rate of the optical communication system.

In the optical communication system using the WDM technology, an arrayed waveguide grating (arrayed waveguide grating, AWG) is disposed in the optical receiving apparatus to demultiplex optical signals with different wavelengths in one beam of optical signals. The arrayed waveguide grating includes a plurality of waveguides configured to output an optical signal. When the AWG demultiplexes optical signals with different wavelengths in one beam of optical signals, an insertion loss of one or more waveguides configured to output an optical signal in the AWG is high.

## SUMMARY

Embodiments of this application provide an arrayed waveguide grating, an optical transmitting apparatus, an optical receiving apparatus, and an optical communication system, so that an insertion loss of one or more waveguides configured to output an optical signal in the arrayed waveguide grating is low.

According to a first aspect, an arrayed waveguide grating is provided. The arrayed waveguide grating includes m first waveguides, a first coupler, k second waveguides, a second coupler, and n third waveguides. The first coupler is connected between the first waveguide and the second waveguide. The second coupler is connected between the second waveguide and the third waveguide. m, n, and k are all positive integers. Lengths of the k second waveguides sequentially increase. A difference between lengths of two adjacent second waveguides is a fixed value. A first phase shift structure is further disposed between the second waveguide and the second coupler. The first waveguide is configured to transmit a first optical signal to the first coupler. The first coupler is configured to: receive the first optical signal transmitted by the first waveguide, generate k second optical signals based on the first optical signal, and couple one second optical signal into one second waveguide for transmission. The second waveguide is configured to transmit the second optical signal to the first phase shift structure. The first phase shift structure is configured to adjust an amplitude of one or more optical signals with different wavelengths in the second optical signal, to generate a third optical signal. The second coupler is configured to: receive the third optical signal generated by the first phase shift structure, generate n fourth optical signals based on the third optical signal, and couple one fourth optical signal into one third waveguide for transmission. The third waveguide is configured to output the fourth optical signal. In the arrayed waveguide grating, the first waveguide is configured to transmit the first optical signal to the first coupler. For example, the first optical signal includes an optical signal with a wavelength of $\lambda 1$, an optical signal with a wavelength of $\lambda 2$, and an optical signal with a wavelength of $\lambda 3$. The first coupler generates the k second optical signals based on the first optical signal, and couples one second optical signal into one second waveguide for transmission. The second optical signal also includes an optical signal with a wavelength of $\lambda 1$, an optical signal with a wavelength of $\lambda 2$, and an optical signal with a wavelength of $\lambda 3$. The second waveguide is configured to transmit the second optical signal to the first phase shift structure. The first phase shift structure is configured to change an amplitude of one or more optical signals with wavelengths in the second optical signal, to generate a third optical signal. For example, a relationship between divergence field distribution and a divergence angle of the second optical signal is Gaussian distribution, and an amplitude decreases smoothly outward from the center. For example, an amplitude of the optical signal with the wavelength of $\lambda 1$ in the second optical signal and an amplitude of the optical signal with the wavelength of $\lambda 3$ in the second optical signal are small, and an amplitude of the optical signal with the wavelength of $\lambda 2$ (a central wavelength) in the second optical signal is large. The first phase shift structure may change the amplitude of the optical signal with the wavelength of $\lambda 1$ in the second optical signal and the amplitude of the optical signal with the wavelength of $\lambda 3$ in the second optical signal, to generate the third optical signal. An amplitude of an optical signal with a wavelength of $\lambda 1$ in the third optical signal is greater than the amplitude of the optical signal with the wavelength of $\lambda 1$ in the second optical signal. An amplitude of an optical signal with a wavelength of $\lambda 3$ in the third optical signal is greater than the amplitude of the optical signal with the

wavelength of $\lambda 3$ in the second optical signal. The first phase shift structure transmits the third optical signal to the second coupler. The second coupler generates n fourth optical signals based on the third optical signal. For example, the n fourth optical signals include one fourth optical signal with wavelengths of $\lambda 1$, one fourth optical signal with wavelengths of $\lambda 2$, and one fourth optical signal with wavelengths of $\lambda 3$. The second coupler couples one fourth optical signal into one second waveguide for transmission. The second waveguide outputs one fourth optical signal. Light intensity of the fourth optical signal output by the third waveguide is positively correlated with a square of an amplitude of the fourth optical signal output by the third waveguide. The light intensity of the fourth optical signal output by the third waveguide is negatively correlated with an insertion loss of the third waveguide. When the amplitude of the optical signal with the wavelength of $\lambda 1$ in the third optical signal is greater than the amplitude of the optical signal with the wavelength of $\lambda 1$ in the second optical signal, an amplitude of the fourth optical signal with the wavelengths of $\lambda 1$ that is generated based on the third optical signal increases. Therefore, the insertion loss of the third waveguide that outputs the fourth optical signal with the wavelength of $\lambda 1$ decreases. When the amplitude of the optical signal with the wavelength of $\lambda 3$ in the third optical signal is greater than the amplitude of the optical signal with the wavelength of $\lambda 3$ in the second optical signal, an amplitude of the fourth optical signal with the wavelengths of $\lambda 3$ that is generated based on the third optical signal increases. Therefore, the insertion loss of the third waveguide that outputs the fourth optical signal with the wavelength of $\lambda 3$ decreases.

Optionally, a second phase shift structure is further disposed between the first waveguide and the first coupler. The first waveguide is specifically configured to transmit the first optical signal to the second phase shift structure. The second phase shift structure is configured to adjust an amplitude of one or more optical signal with wavelengths in the first optical signal, to generate a fifth optical signal. The first coupler is specifically configured to receive the fifth optical signal generated by the second phase shift structure, generate k second optical signals based on the fifth optical signal, and couple one second optical signal into one second waveguide for transmission. In this optional solution, when the second phase shift structure is further disposed between the first waveguide and the first coupler, the second phase shift structure may change the amplitude of the one or more optical signal with wavelengths in the first optical signal, to generate the fifth optical signal. For example, if a relationship between divergence field distribution and a divergence angle of the fifth optical signal is flat-top distribution, a relationship between divergence field distribution and a divergence angle of the second optical signal that is generated by the first coupler based on the fifth optical signal is also flat-top distribution, so that the insertion loss of the waveguide 505 of the arrayed waveguide grating 50 is further reduced.

Optionally, a divergence angle of the third optical signal is equal to a corresponding central angle that is of an arc between a 1st third waveguide and an nth third waveguide and that is on a Rowland circle. In this optional manner, the first phase shift structure may further adjust the divergence angle of the third optical signal. When the divergence angle of the third optical signal generated by the first phase shift structure is equal to the corresponding central angle that is of the arc between the 1st third waveguide and the nth third waveguide and that is on the Rowland circle, it indicates that when the third optical signal is freely transmitted from the second coupler to the n third waveguides, the third optical signal has no energy distributed in an area other than the n third waveguides, so that a device insertion loss of the arrayed waveguide grating can be increased.

Optionally, the first phase shift structure is disposed in the second coupler. In this optional solution, the first phase shift structure is disposed in the second coupler, so that a manufacturing process of the first phase shift structure can be reduced, and the manufacturing process of the first phase shift structure becomes simple.

Optionally, the second phase shift structure is disposed in the first coupler. In this optional solution, the second phase shift structure is disposed in the first coupler, so that a manufacturing process of the second phase shift structure can be reduced, and the manufacturing process of the second phase shift structure becomes simple.

Optionally, the first phase shift structure includes any one of a Powell prism, a metalens, and a liquid crystal lens. In this optional manner, the Powell prism may enable an amplitude of one or more optical signal with wavelengths in an optical signal output by the Powell prism to be the same. For example, a relationship between divergence field distribution and a divergence angle of the optical signal output by the Powell prism is flat-top distribution, and the divergence angle of the optical signal output by the Powell prism may be set to be different. A predetermined divergence angle may be obtained by adjusting a size of the Powell prism. The metalens may enable an amplitude of one or more optical signal with wavelengths in an optical signal output by the metalens to be the same. For example, a relationship between divergence field distribution and a divergence angle of the optical signal output by the metalens is flat-top distribution, and the divergence angle of the optical signal output by the metalens may be set to be different. A predetermined divergence angle may be obtained by adjusting a size of the metalens. The liquid crystal lens may enable an amplitude of one or more optical signals with wavelengths in an optical signal output by the liquid crystal lens to be the same. For example, a relationship between divergence field distribution and a divergence angle of the optical signal output by the metalens is flat-top distribution, and the divergence angle of the optical signal output by the liquid crystal lens may be set to be different. A predetermined divergence angle may be obtained by adjusting voltage values of different areas of the liquid crystal lens.

Optionally, the second phase shift structure includes any one of a Powell prism, a metalens, and a liquid crystal lens. In this optional manner, the Powell prism may enable an amplitude of one or more optical signals with wavelengths in an optical signal output by the Powell prism to be the same. For example, a relationship between divergence field distribution and a divergence angle of the optical signal output by the Powell prism is flat-top distribution, and the divergence angle of the optical signal output by the Powell prism may be set to be different. A predetermined divergence angle may be obtained by adjusting a size of the Powell prism. The metalens may enable an amplitude of one or more optical signals with wavelengths in an optical signal output by the metalens to be the same. For example, a relationship between divergence field distribution and a divergence angle of the optical signal output by the metalens is flat-top distribution, and the divergence angle of the optical signal output by the metalens may be set to be different. A predetermined divergence angle may be obtained by adjusting a size of the metalens. The liquid crystal lens may enable an amplitude of one or more optical signals with wavelengths in an optical signal output by the liquid crystal lens to be the same. For example, a relationship between divergence field distribution and a divergence angle of the optical signal output by the metalens is flat-top distribution, and the divergence angle of the optical signal output by the liquid crystal lens may be set to be different. A predetermined divergence angle may be obtained by adjusting voltage values of different areas of the liquid crystal lens.

Optionally, a difference between amplitudes of any two optical signals with different wavelengths in a plurality of optical signals with different wavelengths in the third optical signal is less than a predetermined value. For example, in this optional manner, if the difference between the amplitudes of any two optical signals with different wavelengths in the plurality of optical signals with different wavelengths in the third optical signal is less than the predetermined value, it indicates that amplitudes of the plurality of optical signals with different wavelengths in the third optical signal are approximately equal. In this case, a relationship between divergence field distribution and a divergence angle of the third optical signal is flat-top distribution.

Optionally, the arrayed waveguide grating further includes a substrate; and the m first waveguides, the first coupler, the k second waveguides, the first phase shift structure, the second coupler, and the n third waveguides are manufactured on the substrate.

According to a second aspect, an optical transmitting apparatus is provided. The optical transmitting apparatus includes a light source, s optical modulators, and the arrayed waveguide grating according to any one of the first aspect. One of the s optical modulators connects the light source and one first waveguide of the arrayed waveguide grating. s is less than or equal to m. m is greater than n.

According to a third aspect, an optical transmitting apparatus is provided. The optical transmitting apparatus includes s light sources, s optical modulators, and the arrayed waveguide grating according to any one of the first aspect. One of the s optical modulators connects one of the s light sources and one first waveguide of the arrayed waveguide grating. s is less than or equal to m. m is greater than n.

According to a fourth aspect, an optical receiving apparatus is provided. The optical receiving apparatus includes the arrayed waveguide grating according to any one of the first aspect and s optical receivers. One third waveguide of the arrayed waveguide grating is connected to one optical receiver. s is less than or equal to n. m is less than n.

According to a fifth aspect, an optical communication system is provided. The optical communication system includes the optical transmitting apparatus according to the second aspect or the third aspect, the optical receiving apparatus according to the fourth aspect, and an optical fiber connecting the optical transmitting apparatus and the optical receiving apparatus.

For technical effects achieved by any one of possible implementations of the second aspect to the fifth aspect, refer to technical effects achieved by any one of different implementations of the first aspect. Details are not described herein again.

## BRIEF DESCRIPTION OF DRAWINGS

FIG. 1 is a diagram of a structure of an optical communication system according to an embodiment of this application;

FIG. 2 is a diagram of a structure of an optical transmitting apparatus according to an embodiment of this application;

FIG. 3 is a diagram of a structure of an optical transmitting apparatus according to another embodiment of this application;

FIG. 4 is a diagram of a structure of an optical receiving apparatus according to an embodiment of this application;

FIG. 5 is a diagram of a structure of an arrayed waveguide grating according to an embodiment of this application;

FIG. 6 is a diagram of an output spectrum of an arrayed waveguide grating according to an embodiment of this application;

FIG. 7 is a diagram of a structure of an arrayed waveguide grating according to another embodiment of this application;

FIG. 8 is a diagram of a structure of a coupler in an arrayed waveguide grating according to another embodiment of this application;

FIG. 9 is a first diagram of a divergence field of an optical signal according to another embodiment of this application;

FIG. 10 is a second diagram of a divergence field of an optical signal according to another embodiment of this application;

FIG. 11 is another diagram of a structure of a coupler in an arrayed waveguide grating according to another embodiment of this application;

FIG. 12 is a first diagram of interference of an optical signal according to another embodiment of this application;

FIG. 13 is a second diagram of interference of an optical signal according to another embodiment of this application;

FIG. 14 is a diagram of a structure of an arrayed waveguide grating according to still another embodiment of this application;

FIG. 15 is a diagram of a structure of a coupler in an arrayed waveguide grating according to still another embodiment of this application;

FIG. 16 is a diagram of a structure of an arrayed waveguide grating according to yet another embodiment of this application;

FIG. 17 is a diagram of an output spectrum of an arrayed waveguide grating according to yet another embodiment of this application;

FIG. 18 is a diagram of a structure of an arrayed waveguide grating according to another embodiment of this application;

FIG. 19 is a diagram of a structure of a material layer of an arrayed waveguide grating according to still another embodiment of this application;

FIG. 20 is a diagram of a structure of a phase shift structure in an arrayed waveguide grating according to yet another embodiment of this application;

FIG. 21 is a diagram of a structure of a phase shift structure in an arrayed waveguide grating according to another embodiment of this application;

FIG. 22 is a first diagram of a structure of a material layer of a phase shift structure in an arrayed waveguide grating according to another embodiment of this application;

FIG. 23 is a second diagram of a structure of a material layer of a phase shift structure in an arrayed waveguide grating according to another embodiment of this application;

FIG. 24 is a principle diagram of a phase shift structure in an arrayed waveguide grating according to another embodiment of this application;

FIG. 25 is a diagram of a structure of a phase shift structure in an arrayed waveguide grating according to still another embodiment of this application; and

FIG. 26 is a diagram of a structure of a phase shift structure in an arrayed waveguide grating according to yet another embodiment of this application.

## DESCRIPTION OF EMBODIMENTS

The following describes the technical solutions in embodiments of this application with reference to the accompanying drawings in embodiments of this application. It is clear that the described embodiments are merely some rather than all of embodiments of this application.

Unless otherwise defined, all technical terms used herein have same meanings as those commonly known to a person of ordinary skill in the art. In embodiments of this application, "at least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, in embodiments of this application, terms such as "first" and "second" do not limit a quantity or an execution sequence.

In addition, in embodiments of this application, position terms such as "on" and "below" are defined relative to positions of components in the accompanying drawings. It should be understood that these directional terms are relative concepts used for relative description and clarification, and may correspondingly change with the positions of the components in the accompanying drawings.

In embodiments of this application, the terms such as "example" or "for example" are used to represent giving an example, an illustration, or a description. Any embodiment or design scheme described as "example" or "for example" in embodiments of this application shall not be construed as being more preferred or having more advantages than another embodiment or design scheme. Exactly, use of the terms such as "example" or "for example" is intended to present a relative concept in a specific manner.

The following describes technical solutions in embodiments of this application with reference to the accompanying drawings.

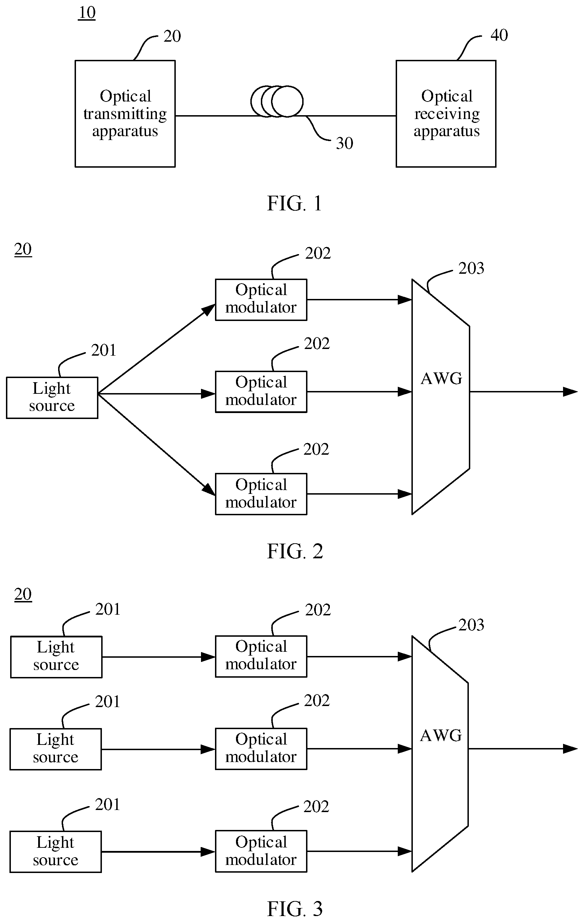

Refer to FIG. 1. An embodiment of this application provides a diagram of a structure of an optical communication system 10. The optical communication system 10 uses a wavelength division multiplexing (wavelength division multiplexing, WDM) technology to transmit an optical signal. The WDM technology is a technology used to multiplex an optical signal with a plurality of different wavelengths, to transmit a multiplexed signal in a same optical fiber. The WDM technology continuously increases a communication capacity and a communication rate of the optical communication system 10. The optical communication system 10 includes an optical transmitting apparatus 20, an optical fiber 30, and an optical receiving apparatus 40. The optical transmitting apparatus 20 is configured to: generate a modulated optical signal with a plurality of wavelengths, multiplex the modulated optical signal with the plurality of wavelengths into a multiplexed optical signal, and transmit the multiplexed optical signal to the optical receiving apparatus 40 through the optical fiber 30. The optical receiving apparatus 40 is configured to: receive the multiplexed optical signal transmitted in the optical fiber 30, demultiplex a modulated optical signal with different wavelengths in the multiplexed optical signal, and transmit a modulated optical signal with a predetermined wavelength to a predetermined optical receiver.

For example, the optical communication system 10 further includes an optical amplifier and an optical add/drop multiplexer (optical add/drop multiplexer, OADM). The optical amplifier is disposed between two optical fibers. The optical amplifier is configured to amplify an optical signal transmitted in an optical fiber connected to an input end of the optical amplifier, and output an amplified optical signal through an optical fiber connected to an output end of the optical amplifier. The optical add/drop multiplexer is disposed in an optical signal transmission path, and is configured to implement wavelength adding (add wave) and wavelength dropping (down wave) of one or more optical signals with wavelengths in the optical communication system, and also ensure non-blocking pass-through of an optical signal with another wavelength. The optical communication system is not limited in this embodiment of this application.

For example, refer to FIG. 2. An embodiment of this application provides a diagram of a structure of an optical transmitting apparatus. The optical transmitting apparatus 20 includes one light source 201, a plurality of optical modulators 202, and an arrayed waveguide grating (arrayed waveguide grating, AWG) 203. The arrayed waveguide grating 203 includes a plurality of waveguides configured to receive optical signals and one waveguide configured to output an optical signal. One optical modulator 202 connects the light source 201 and one waveguide that is in the arrayed waveguide grating 203 and that is configured to receive an optical signal. The waveguide that is in the arrayed waveguide grating 203 and that is configured to output an optical signal is connected to an optical fiber 30. The light source 201 is configured to emit carrier optical signals with different wavelengths, and transmit the carrier optical signals with different wavelengths to different optical modulators 202. The optical modulator 202 is configured to: receive a carrier optical signal with a predetermined wavelength and a transmitted signal, modulate the transmitted signal to the carrier optical signal with the predetermined wavelength to generate a modulated optical signal with the predetermined wavelength, and transmit the modulated optical signal with the predetermined wavelength to the arrayed waveguide grating 203. The arrayed waveguide grating 203 is configured to: receive modulated optical signals with different wavelengths generated by the plurality of optical modulators 202, multiplex the modulated optical signals with different wavelengths to generate a multiplexed optical signal, and transmit the multiplexed optical signal to the optical receiving apparatus 40 through the optical fiber 30.

For example, in FIG. 2, three optical modulators 202 are used as an example for description. The light source 201 is configured to generate carrier optical signals with three wavelengths. The carrier optical signals with the three wavelengths are respectively a carrier optical signal with a wavelength of $\lambda 1$, a carrier optical signal with a wavelength of $\lambda 2$, and a carrier optical signal with a wavelength of $\lambda 3$. The light source 201 transmits the carrier optical signal with the wavelength of $\lambda 1$ to a 1st optical modulator 202. The 1st optical modulator 202 is configured to receive the carrier optical signal with the wavelength of $\lambda 1$ and a transmitted signal 1, and modulate the transmitted signal 1 to the carrier optical signal with the wavelength of $\lambda 1$ to generate a modulated optical signal with the wavelength of $\lambda 1$. The light source 201 transmits the carrier optical signal with the wavelength of $\lambda 2$ to a 2nd optical modulator 202. The 2nd optical modulator 202 is configured to receive the carrier optical signal with the wavelength of $\lambda 2$ and a transmitted signal 2, and modulate the transmitted signal 2 to the carrier optical signal with the wavelength of $\lambda 2$ to generate a modulated optical signal with the wavelength of $\lambda 2$. The light source 201 transmits the carrier optical signal with the wavelength of $\lambda 3$ to a 3rd optical modulator 202. The 3rd optical modulator 202 is configured to receive the carrier optical signal with the wavelength of $\lambda 3$ and a transmitted signal 3, and modulate the transmitted signal 3 to the carrier optical signal with the wavelength of $\lambda 3$ to generate a modulated optical signal with the wavelength of $\lambda 3$. The arrayed waveguide grating 203 is configured to: receive the modulated optical signal with the wavelength of $\lambda 1$, the modulated optical signal with the wavelength of $\lambda 2$, and the modulated optical signal with the wavelength of $\lambda 3$, multiplex the modulated optical signal with the wavelength of $\lambda 1$, the modulated optical signal with the wavelength of $\lambda 2$, and the modulated optical signal with the wavelength of $\lambda 3$ into a multiplexed optical signal, and transmit the multiplexed optical signal to the optical receiving apparatus 40 through the optical fiber 30.

In some other embodiments, refer to FIG. 3. An embodiment of this application provides a diagram of a structure of an optical transmitting apparatus. The optical transmitting apparatus 20 includes a plurality of light sources 201, a plurality of optical modulators 202, and an arrayed waveguide grating (arrayed waveguide grating, AWG) 203. The arrayed waveguide grating 203 includes a plurality of waveguides configured to receive optical signals and one waveguide configured to output an optical signal. One optical modulator 202 connects one light source 201 and one waveguide that is in the arrayed waveguide grating 203 and that is configured to receive an optical signal. The waveguide that is in the arrayed waveguide grating 203 and that is configured to output an optical signal is connected to an optical fiber 30. The light source 201 is configured to emit a carrier optical signal with a predetermined wavelength, and transmit the carrier optical signal with the predetermined wavelength to a predetermined optical modulator 202. The optical modulator 202 is configured to: receive a carrier optical signal with a predetermined wavelength and a transmitted signal, modulate the transmitted signal to the carrier optical signal with the predetermined wavelength to generate a modulated optical signal with the predetermined wavelength, and transmit the modulated optical signal with the predetermined wavelength to the arrayed waveguide grating 203. The arrayed waveguide grating 203 is configured to: receive modulated optical signals with different wavelengths generated by the plurality of optical modulators 202, multiplex the modulated optical signals with different wavelengths to generate a multiplexed optical signal, and transmit the multiplexed optical signal to the optical receiving apparatus 40 through the optical fiber 30.

For example, in FIG. 3, three light sources 201 and three optical modulators 202 are used as an example for description. A 1st light source 201 is configured to generate a carrier optical signal with a wavelength of λ1, and transmit the carrier optical signal with the wavelength of λ1 to a 1st optical modulator 202. The 1st optical modulator 202 is configured to receive the carrier optical signal with the wavelength of λ1 and a transmitted signal 1, and modulate the transmitted signal 1 to the carrier optical signal with the wavelength of λ1 to generate a modulated optical signal with the wavelength of λ1. A 2nd light source 201 is configured to generate a carrier optical signal with a wavelength of λ2, and transmit the carrier optical signal with the wavelength of λ2 to a 2nd optical modulator 202. The 2nd optical modulator 202 is configured to receive the carrier optical signal with the wavelength of λ2 and a transmitted signal 2, and modulate the transmitted signal 2 to the carrier optical signal with the wavelength of λ2 to generate a modulated optical signal with the wavelength of λ2. A 3rd light source 201 is configured to generate a carrier optical signal with a wavelength of λ3, and transmit the carrier optical signal with the wavelength of λ3 to a 3rd optical modulator 202. The 3rd optical modulator 202 is configured to receive the carrier optical signal with the wavelength of λ3 and a transmitted signal 3, and modulate the transmitted signal 3 to the carrier optical signal with the wavelength of λ3 to generate a modulated optical signal with the wavelength of λ3. The arrayed waveguide grating 203 is configured to: receive the modulated optical signal with the wavelength of λ1, the modulated optical signal with the wavelength of λ2, and the modulated optical signal with the wavelength of λ3, multiplex the modulated optical signal with the wavelength of λ1, the modulated optical signal with the wavelength of λ2, and the modulated optical signal with the wavelength of λ3 into a multiplexed optical signal, and transmit the multiplexed optical signal to the optical receiving apparatus 40 through the optical fiber 30.

For example, the optical transmitting apparatus 20 shown in FIG. 2 or FIG. 3 may further include an optical transmitter. The optical transmitter is configured to generate a transmitted signal. The optical transmitting apparatus 20 is not limited in this embodiment of this application.

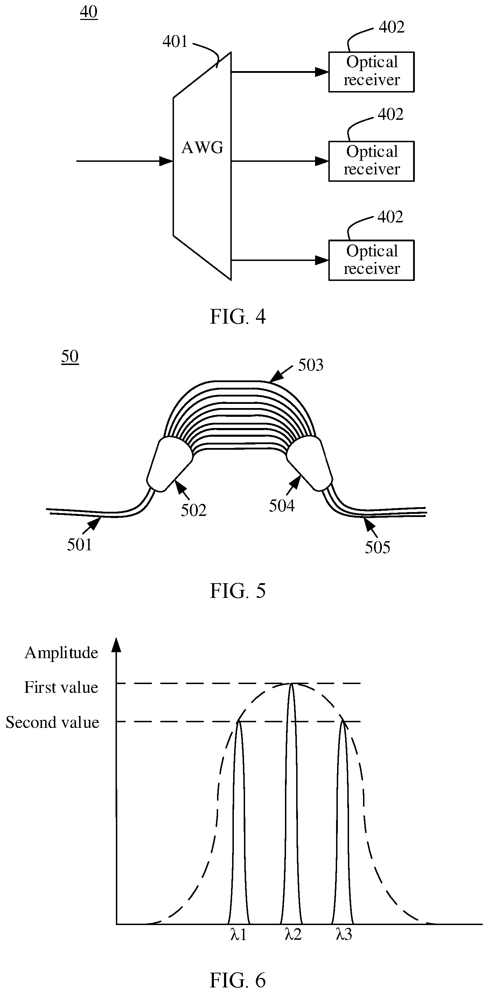

The multiplexed optical signal generated by the optical transmitting apparatus 20 is transmitted to the optical receiving apparatus 40 through the optical fiber 30. Refer to FIG. 4. An embodiment of this application provides a diagram of a structure of an optical receiving apparatus 40. The optical receiving apparatus 40 includes an arrayed waveguide grating (arrayed waveguide grating, AWG) 401 and a plurality of optical receivers 402. The arrayed waveguide grating 401 includes one waveguide configured to receive an optical signal and a plurality of waveguides configured to output optical signals. One optical receiver 402 is connected to one waveguide that is in the arrayed waveguide grating 401 and that is configured to output an optical signal. The waveguide that is in the arrayed waveguide grating 401 and that is configured to receive an optical signal is connected to the optical fiber 30. The arrayed waveguide grating 401 is configured to: receive the multiplexed optical signal transmitted in the optical fiber 30, demultiplex a modulated optical signal with different wavelengths in the multiplexed optical signal, and transmit a modulated optical signal with a predetermined wavelength to a predetermined optical receiver 402. The optical receiver 402 is configured to receive the modulated optical signal with the predetermined wavelength, and obtain a transmitted signal based on the modulated optical signal with the predetermined wavelength, to implement communication.

For example, in FIG. 4, three optical receivers 402 are used as an example for description. For example, when the multiplexed optical signal includes a modulated optical signal with a wavelength of λ1, a modulated optical signal with a wavelength of λ2, and a modulated optical signal with a wavelength of λ3, the arrayed waveguide grating 401 receives the multiplexed optical signal transmitted in the optical fiber 30, demultiplexes the multiplexed optical signal to generate modulated optical signals with different wavelengths, and transmits the modulated optical signal with the wavelength of λ1 to a 1st optical receiver 402. The 1st optical receiver 402 receives the modulated optical signal with the wavelength of λ1, and obtains a transmitted signal 1 from the modulated optical signal with the wavelength of λ1. The arrayed waveguide grating 401 transmits the modulated optical signal with the wavelength of $\lambda 2$ to a 2nd optical receiver 402. The 2nd optical receiver 402 receives the modulated optical signal with the wavelength of $\lambda 2$, and obtains a transmitted signal 2 from the modulated optical signal with the wavelength of $\lambda 2$. The arrayed waveguide grating 401 transmits the modulated optical signal with the wavelength of $\lambda 3$ to a 3rd optical receiver 402. The 3rd optical receiver 402 receives the modulated optical signal with the wavelength of $\lambda 3$, and obtains a transmitted signal 3 from the modulated optical signal with the wavelength of $\lambda 3$.

For example, the optical receiving apparatus 40 shown in FIG. 4 may further include an optical demodulator. The optical demodulator is connected between one optical receiver and one waveguide that is in the arrayed waveguide grating 401 and that is configured to output an optical signal. The optical demodulator generates a received signal based on an optical signal output by the waveguide that is in the arrayed waveguide grating 401 and that is configured to output an optical signal, and transmits the received signal to the optical receiver. The optical receiving apparatus 40 is not limited in this embodiment of this application.

For example, refer to FIG. 5. An embodiment of this application provides a diagram of a structure of an arrayed waveguide grating. Refer to FIG. 5. The arrayed waveguide grating 50 includes m waveguides 501, a coupler 502, k waveguides 503, a coupler 504, and n waveguides 505. The coupler 502 is connected between the waveguide 501 and the waveguide 503. The coupler 504 is connected between the waveguide 503 and the waveguide 505. m, n, and k are all positive integers. Lengths of the k waveguides 503 sequentially increase. For example, based on a placement position of the arrayed waveguide grating 50 shown in FIG. 5, the lengths of the k waveguides 503 sequentially increase from bottom to top, and a difference between length values of two adjacent waveguides 503 in the k waveguides 503 is a fixed value. For example, length values of the k waveguides 503 form an arithmetic sequence.

For example, when the arrayed waveguide grating 50 is used in the optical receiving apparatus 40, the arrayed waveguide grating 50 is specifically the arrayed waveguide grating 401 shown in FIG. 4. Refer to FIG. 5. An example in which the arrayed waveguide grating 50 includes one waveguide 501, 11 waveguides 503, and three waveguides 505 is used for description. For example, the waveguide 501 in the arrayed waveguide grating 50 is connected to the optical fiber 30 shown in FIG. 1. The waveguide 501 is configured to receive a multiplexed optical signal transmitted in the optical fiber 30. The multiplexed optical signal includes four modulated optical signals with different wavelengths. The waveguide 501 is further configured to input the multiplexed optical signal into the coupler 502. The multiplexed optical signal is freely transmitted in the coupler 502. The coupler 502 is configured to evenly couple the multiplexed optical signal into the 11 waveguides 503 and transmit a coupled multiplexed optical signal to the coupler 504 through the 11 waveguides 503. The coupled multiplexed optical signal is freely transmitted in the coupler 504 and output through the waveguide 505. After being transmitted through the waveguide 503 and the coupler 504, modulated optical signals with different wavelengths in the multiplexed optical signal are focused on one predetermined waveguide 505 and output through the waveguide 505. One of the three waveguides 503 is connected to one optical receiver 402 shown in FIG. 4. The arrayed waveguide grating 50 demultiplexes a plurality of modulated optical signals with different wavelengths in the multiplexed optical signal.

For example, refer to FIG. 5. When an optical signal transmitted by any one of the waveguides 503 to the coupler 504 is freely transmitted in the coupler 504, a relationship between divergence field distribution and a divergence angle of the optical signal is Gaussian distribution, and an optical signal transmitted by any one of the waveguides 503 to the coupler 504 is at a position of the three waveguides 505. An amplitude peak is at a center of the three waveguides 505, and an amplitude of the optical signal in the Gaussian distribution decrease smoothly outward from the center. Refer to FIG. 6. The three waveguides 505 respectively output an optical signal with a wavelength of $\lambda 1$, an optical signal with a wavelength of $\lambda 2$, and an optical signal with a wavelength of $\lambda 3$. An amplitude at the waveguide 505 that outputs the optical signal with the wavelength of $\lambda 2$ is a first value, an amplitude at the waveguide 505 that outputs the optical signal with the wavelength of $\lambda 1$ is a second value, and an amplitude at the waveguide 505 that outputs the optical signal with the wavelength of $\lambda 3$ is also the second value. The first value is greater than the second value, and light intensity of an optical signal output by one waveguide 505 is positively correlated with a square of an amplitude of the optical signal output by the waveguide 505. Therefore, light intensity of an optical signal output by the waveguide 505 that outputs the optical signal with the wavelength of $\lambda 2$ is high, light intensity of an optical signal output by the waveguide 505 that outputs the optical signal with the wavelength of $\lambda 1$ is low, and light intensity of an optical signal output by the waveguide 505 that outputs the optical signal with the wavelength of $\lambda 3$ is low. Light intensity of an optical signal output by one waveguide 505 is negatively correlated with an insertion loss (also referred to as an insertion loss) of the waveguide 505. Therefore, an insertion loss of the waveguide 505 that outputs the optical signal with the wavelength of $\lambda 1$ is high, and an insertion loss of the waveguide 505 that outputs the optical signal with the wavelength of $\lambda 3$ is high.

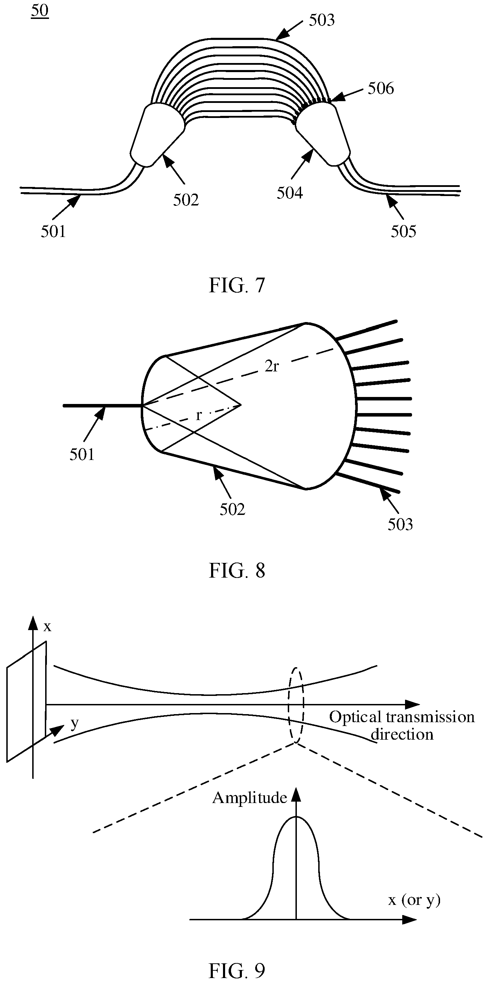

To reduce an insertion loss of a waveguide configured to output an optical signal in an arrayed waveguide grating, refer to FIG. 7. An embodiment of this application provides an arrayed waveguide grating. The arrayed waveguide grating includes m waveguides 501, a coupler 502, k waveguides 503, a coupler 504, and n waveguides 505. The coupler 502 is connected between the waveguide 501 and the waveguide 503. The coupler 504 is connected between the waveguide 503 and the waveguide 505. m, n, and k are all positive integers. Lengths of the k waveguides 503 sequentially increase. For example, based on the placement position of the arrayed waveguide grating 50 shown in FIG. 7, the lengths of the k waveguides 503 sequentially increase from bottom to top, a difference between lengths of two adjacent waveguides 503 is a fixed value, and length values of the k waveguides 503 form an arithmetic sequence.

A phase shift structure 506 is further disposed between the waveguide 503 and the coupler 504. For example, specifically, one phase shift structure 506 is disposed between each waveguide 503 and the coupler 504. Refer to FIG. 7. An example in which the arrayed waveguide grating 50 includes one waveguide 501, 11 waveguides 503, and three waveguides 505 is used for description. Such an arrayed waveguide grating 50 is configured to implement a function of demultiplexing optical signals with different wavelengths in a multiplexed optical signal. Specifically, the arrayed waveguide grating 50 is the arrayed waveguide grating 401 in the optical receiving apparatus 40 shown in FIG. 4. The waveguide 501 in the arrayed waveguide grating 50 shown in FIG. 7 is connected to the optical fiber 30 shown in FIG. 1. One waveguide 505 in the arrayed waveguide grating 50 shown in FIG. 7 is connected to one optical receiver 402 shown in FIG. 4. When the arrayed waveguide grating 50 is disposed in the optical receiving apparatus, the arrayed waveguide grating 50 may include m waveguides 501, k waveguides 503, and n waveguides 505, and the optical receiving apparatus includes s optical receivers, where m is greater than n, and s is less than or equal to n.

The waveguide 501 is configured to transmit a first optical signal to the coupler 502. For example, the first optical signal may be a multiplexed optical signal transmitted by the optical fiber 30 to the optical receiving apparatus 40. In this case, the first optical signal includes an optical signal with a wavelength of $\lambda 1$, an optical signal with a wavelength of $\lambda 2$, and an optical signal with a wavelength of $\lambda 3$.

The coupler 502 is configured to: receive the first optical signal transmitted by the waveguide 501, generate 11 second optical signals based on the first optical signal, and couple one second optical signal into one waveguide 503 for transmission. Specifically, refer to FIG. 8. An embodiment of this application provides a diagram of a structure of a coupler 502. An output end of the waveguide 501 is arranged on a circumference of a Rowland circle of the coupler 502, and input ends of the 11 waveguides 503 are arranged on a grating circle whose radius is twice a radius of the Rowland circle. A first optical signal transmitted by the waveguide 501 from the output end of the waveguide 501 to the coupler 502 is freely transmitted in the coupler 502. The coupler 502 generates 11 second optical signals based on the first optical signal. Specifically, the 11 second optical signals have equal power, and each second optical signal includes an optical signal with a wavelength of $\lambda 1$, an optical signal with a wavelength of $\lambda 2$, and an optical signal with a wavelength of $\lambda 3$. The coupler 502 couples one second optical signal into one waveguide 503 for transmission.

When an optical signal with a wavelength of $\lambda 1$ in the first optical signal is freely transmitted in the coupler 502 to any one of the 11 waveguides 503, optical paths are consistent, and phases are consistent. The phase is denoted as $\Phi_i = \varphi_{(\lambda 1-1)}$. $\Phi_i$ is a phase of an optical signal with a wavelength of $\lambda 1$ in a second optical signal received by an $i^{th}$ waveguide 503 in the 11 waveguides 503. i=[-5, -4, -3, -2,-1, 0, 1, 2, 3, 4, 5]. For example, based on the placement position of the array waveguide 50 shown in FIG. 5, the 11 waveguides 503 are a $(-5)^{th}$ waveguide 503, a $(-4)^{th}$ waveguide 503, a $(-3)^{rd}$ waveguide 503, ..., the $i^{th}$ waveguide 503, ..., and a $5^{th}$ waveguide in sequence from bottom to top. It can be learned, based on the formula, that a start phase of any optical signal with a wavelength of $\lambda 1$ that is in the second optical signal and that is transmitted to the waveguide 503 is $\varphi_{(\lambda 1-1)}$. When an optical signal with a wavelength of $\lambda 2$ in the first optical signal is freely transmitted in the coupler 502 to any one of the 11 waveguides 503, optical paths are consistent, and phases are consistent. The phase is denoted as $\Phi_i = \varphi_{(\lambda 2-1)}$. $\Phi_i$ is a phase of an optical signal with a wavelength of $\lambda 2$ in a second optical signal received by the $i^{th}$ waveguide 503 in the 11 waveguides 503. i=[-5, -4, -3, -2, -1, 0, 1, 2, 3, 4, 5]. Therefore, a start phase of any optical signal with a wavelength of $\lambda 2$ that is in the second optical signal and that is transmitted to the waveguide 503 is $\varphi_{(\lambda 2-1)}$. When an optical signal with a wavelength of $\lambda 3$ in the first optical signal is freely transmitted in the coupler 502 to any one of the 11 waveguides 503, optical paths are consistent, and phases are consistent. The phase is denoted as $\Phi_i = \varphi_{(\lambda 3-1)}$. $\Phi_i$ is a phase of an optical signal with a wavelength of $\lambda 3$ in a second optical signal received by the $i^{th}$ waveguide 503 in the 11 waveguides 503. i=[-5, -4, -3, -2, -1, 0, 1, 2, 3, 4, 5]. Therefore, a start phase of any optical signal with a wavelength of $\lambda 3$ that is in the second optical signal and that is transmitted to the waveguide 503 is $\varphi_{(\lambda 3-1)}$.

The waveguide 503 is configured to transmit the second optical signal to the phase shift structure 506. For example, lengths of the 11 waveguides 503 sequentially increase from bottom to top, a difference between lengths of two adjacent waveguides 503 is a fixed value, and length values of the 11 waveguides 503 form an arithmetic sequence. Therefore, an optical signal with a wavelength of $\lambda 1$ in the second optical signal is transmitted through different optical paths in the 11 waveguides 503, and a phase of the optical signal with the wavelength of $\lambda 1$ that is in the second optical signal output by any one of the 11 waveguides 503 is also different. Refer to a formula $n_s \Delta L = m\lambda_1 - n_s \Delta l_1$ and a formula $\Phi_i = \varphi_{(\lambda 1-1)} + \varphi_{(\lambda 1-2)} + i^*$

$(2m\pi - \Delta\varphi_{(\lambda1-1)})$. $n_s$ is a refractive index of a material of the waveguide 503. m is a diffraction order, and m=1, 2, 3, .... $\lambda_1$ is a wavelength of the optical signal with the wavelength of $\lambda1$ in the second optical signal. $\varphi_{(\lambda1-2)}$ is a phase generated when the optical signal with the wavelength of $\lambda1$ in the second optical signal passes through a central waveguide in the 11 waveguides 503 (where the waveguide 503 with i=0 is the central waveguide). $\Delta L$ is a length difference between two adjacent waveguides 503. $\Delta L$ is designed based on an integer cycle (an integer multiple of $2\pi$) of a central wavelength (where for example, in this example, the central wavelength is $\lambda2$). Therefore, for a non-central wavelength of $\lambda1$, an offset $\Delta l_1$ is generated, and therefore, a phase difference $\Delta\varphi_{(\lambda1-1)}$ is generated. Therefore, a phase difference between optical signals with wavelengths of $\lambda1$ that are in the second optical signals output by two adjacent waveguides 503 in the 11 waveguides 503 is fixed but is not an integer multiple of $2\pi$. An optical signal with a wavelength of $\lambda2$ in the second optical signal is transmitted through different optical paths in the 11 waveguides 503, and a phase of the optical signal with the wavelength of $\lambda2$ that is in the second optical signal output by any one of the 11 waveguides 503 is also different. Refer to a formula $n_c\Delta L = m\lambda_2$ and a formula $\Phi_i = \varphi_{(\lambda2-1)} + \varphi_{(\lambda2-2)} + i2m\pi$. $n_c$ is a refractive index of a material of the waveguide 503. m is a diffraction order, and m=1, 2, 3, .... $\lambda_2$ is a wavelength of the optical signal with the wavelength of $\lambda2$ in the second optical signal. $\varphi_{(\lambda2-2)}$ is a phase generated when the optical signal with the wavelength of $\lambda2$ (a central wavelength) in the second optical signal passes through a central waveguide in a plurality of waveguides 503. $\Delta L$ is a length difference between two adjacent waveguides 503. $\Delta L$ is designed based on an integer cycle (an integer multiple of $2\pi$) of the central wavelength ($\lambda2$). Therefore, a phase difference between optical signals with wavelengths of $\lambda2$ that are in the second optical signals output by two adjacent waveguides 503 in the 11 waveguides 503 is fixed, and the phase difference is an integer multiple of $2\pi$. An optical signal with a wavelength of $\lambda3$ in the second optical signal is transmitted through different optical paths in the 11 waveguides 503, and a phase of the optical signal with the wavelength of $\lambda3$ that is in the second optical signal output by any one of the 11 waveguides 503 is also different. Refer to a formula $n_s\Delta L = m\lambda_3 - n_s\Delta l_1$ and a formula $\Phi_i = \varphi_{(\lambda3-1)} + \varphi_{(\lambda3-2)} + i*(2m\pi - \Delta\varphi_{(\lambda3-1)})$. $n_s$ is a refractive index of a material of the waveguide 503. m is a diffraction order, and m=1, 2, 3, .... $\lambda3$ is a wavelength of the optical signal with the wavelength of $\lambda3$ in the second optical signal. $\varphi_{(\lambda3-2)}$ is a phase generated when the optical signal with the wavelength of $\lambda3$ in the second optical signal passes through a central waveguide in the plurality of waveguides 503. $\Delta L$ is a length difference between two adjacent waveguides 503. $\Delta L$ is designed based on an integer cycle (an integer multiple of $2\pi$) of a central wavelength (where for example, in this example, the central wavelength is $\lambda2$). Therefore, for a non-central wavelength of $\lambda3$, an offset $\Delta l_1$ is

generated, and therefore, a phase difference $\Delta\varphi_{(\lambda3-1)}$ is generated. Therefore, a phase difference between optical signals with wavelengths of $\lambda3$ that are in the second optical signals output by two adjacent waveguides 503 in the 11 waveguides 503 is fixed but is not an integer multiple of $2\pi$.

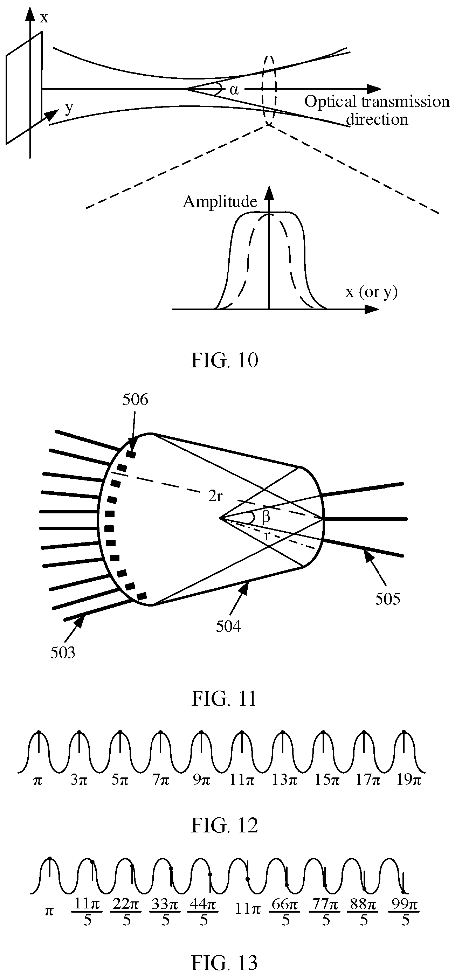

The phase shift structure 506 is configured to adjust an amplitude of one or more optical signals with wavelengths in the second optical signal, to generate a third optical signal. For example, the phase shift structure 506 may be disposed in the coupler 504, so that a manufacturing process of the phase shift structure 506 is simple. Refer to FIG. 9. A relationship between divergence field distribution and a divergence angle of the second optical signal is Gaussian distribution, and an amplitude decreases smoothly outward from the center. A size of the second optical signal on an xy plane is a size of a light spot of the second optical signal. For example, an amplitude of the optical signal with the wavelength of $\lambda1$ in the second optical signal and an amplitude of the optical signal with the wavelength of $\lambda3$ in the second optical signal are small, and an amplitude of the optical signal with the wavelength of $\lambda2$ (a central wavelength) in the second optical signal is large. The phase shift structure 506 may change the amplitude of the optical signal with the wavelength of $\lambda1$ in the second optical signal and the amplitude of the optical signal with the wavelength of $\lambda3$ in the second optical signal. For example, refer to FIG. 10. Specifically, the phase shift structure 506 may adjust the amplitude of the optical signal with the wavelength of $\lambda1$ in the second optical signal and the amplitude of the optical signal with the wavelength of $\lambda3$ in the second optical signal by adjusting a phase of the second optical signal, to generate the third optical signal. An amplitude of an optical signal with a wavelength of $\lambda1$ in the third optical signal is greater than the amplitude of the optical signal with the wavelength of $\lambda1$ in the second optical signal. An amplitude of an optical signal with a wavelength of $\lambda3$ in the third optical signal is greater than the amplitude of the optical signal with the wavelength of $\lambda3$ in the second optical signal. For example, as shown in FIG. 10, a relationship between divergence field distribution and a divergence angle of the third optical signal is flat-top distribution. A size of the third optical signal on an xy plane is a size of a light spot of the third optical signal. For example, in a predetermined range of a predetermined radius range that is centered at a center of a light spot, a difference between amplitudes of optical signals with any two wavelengths in the third optical signal is less than a predetermined value, in other words, amplitudes of an optical signal with a plurality of different wavelengths in the third optical signal are approximately equal.

The phase shift structure 506 is configured to change an amplitude of one or more optical signals with different wavelengths in the second optical signal, to generate the third optical signal. For example, a relationship between divergence field distribution and a divergence angle of the third optical signal output by the phase shift structure 506 is flat-top distribution, but the phase shift structure 506 does not change a phase difference between optical signals with wavelengths of $\lambda 1$ that are in the second optical signals output by two adjacent waveguides 503 in the 11 waveguides 503, does not change a phase difference between optical signals with wavelengths of $\lambda 2$ that are in the second optical signals output by two adjacent waveguides 503 in the 11 waveguides 503, and does not change a phase difference between optical signals with wavelengths of $\lambda 3$ that are in the second optical signals output by two adjacent waveguides 503 in the 11 waveguides 503. Therefore, a phase difference between optical signals with wavelengths of $\lambda 1$ that are in the third optical signals output by two adjacent phase shift structures 506 in the 11 phase shift structures 506 is fixed and is not an integer multiple of $2\pi$. A phase difference between optical signals with wavelengths of $\lambda 2$ that are in the third optical signals output by two adjacent phase shift structures 506 in the 11 phase shift structures 506 is fixed and is an integer multiple of $2\pi$. A phase difference between optical signals with wavelengths of $\lambda 3$ that are in the third optical signals output by two adjacent phase shift structures 506 in the 11 phase shift structures 506 is fixed and is not an integer multiple of $2\pi$.

The coupler 504 is configured to: receive the third optical signal generated by the phase shift structure 506, generate three fourth optical signals based on the third optical signal, and couple one fourth optical signal into one waveguide 505 for transmission. Specifically, refer to FIG. 11. An embodiment of this application provides a diagram of a structure of a coupler 504. The phase shift structure 506 is disposed in the coupler 504, and the coupler 504 and the coupler 502 mirror each other. Input ends of three waveguides 505 are arranged on a circumference of a Rowland circle of the coupler 504. Output ends of the 11 waveguides 503 are arranged on a circumference whose radius is twice a radius of the Rowland circle. An amplitude of one or more optical signals with wavelengths in the second optical signal that is transmitted by any one of the waveguides 503 to the phase shift structure 506 is adjusted by using the phase shift structure 506, to generate the third optical signal. The third optical signal is freely transmitted in the coupler 504. The coupler 504 generates three fourth optical signals based on the third optical signal. Any two fourth optical signals have different wavelengths. The coupler 504 couples one fourth optical signal into one waveguide 505 for transmission. The waveguide 505 is configured to output the fourth optical signal.

For example, a fourth optical signal output by a 1st waveguide 505 in the three waveguides 505 is an optical signal with a wavelength of $\lambda 1$, a fourth optical signal output by a 2nd waveguide 505 in the three waveguides 505 is an optical signal with a wavelength of $\lambda 2$, and a fourth optical signal output by a 3rd waveguide 505 in the three waveguides 505 is an optical signal with a wavelength of $\lambda 3$. The 2nd waveguide 505 in the three waveguides 505 is a central waveguide, and a wavelength of the optical signal with the wavelength of $\lambda 2$ is a central wavelength. When an optical signal with a wavelength of $\lambda 1$ in the third optical signal generated by each of the 11 phase shift structures 506 is freely transmitted from each phase shift structure 506 to the 1st waveguide 505 in the three waveguides 505 through the coupler 504, optical paths are different, so that phases of optical signals with wavelengths of $\lambda 1$ in third optical signals generated by different phase shift structures 506 are also different when the optical signals with the wavelengths of $\lambda 1$ are transmitted to the 1st waveguide 505 in the three waveguides 505. Refer to a formula $L_i =/+i*\Delta l_2$ and a formula $\Phi_i = \varphi_{(\lambda 1-1)} + \varphi_{(\lambda 1-2)} + \varphi_{(\lambda 1-3)} +i* (2m\pi - \Delta\varphi_{(\lambda 1-1)} + \Delta\varphi_{(\lambda 1-2)})$. $L_i$ is a length from the $i^{th}$ waveguide 503 in the 11 waveguides 503 to one waveguide 505. $l$ is a length from the central waveguide in the plurality of waveguides 503 to the waveguide 505. $\varphi_{(\lambda 1-3)}$ is a phase generated when the optical signal with the wavelength of $\lambda 1$ in the third optical signal arrives at the 1st waveguide 505 in the three waveguides 505. Lengths from the central waveguide in the plurality of waveguides 503 to all of the waveguides 505 are the same. An offset $\Delta l_2$ is generated when non-central waveguides in the plurality of waveguides 503 arrive at different waveguides 505, and therefore, a phase difference $\Delta\varphi_{(\lambda 1-2)}$ is generated. When the optical signal with the wavelength of $\lambda 1$ in the third optical signal arrives at the 1st waveguide 505 in the three waveguides 505, a value of a generated phase difference $\Delta\varphi_{(\lambda 1-2)}$ is equal to $\Delta\varphi_{(\lambda 1-1)}$, so that a phase difference between optical signals with wavelengths of $\lambda 1$ in the third optical signals generated by different phase shift structures 506 is exactly an integer multiple of $2\pi$ when the optical signals with the wavelengths of $\lambda 1$ are transmitted to the 1st waveguide 505 in the three waveguides 505. Refer to FIG. 12. For example, a phase that is of an optical signal with a wavelength of $\lambda 1$ in a third optical signal freely transmitted by an $x^{th}$ phase shift structure 506 in the 11 phase shift structures 506 to the 1st waveguide 505 in the three waveguides 505 through the coupler 504 and that is at the 1st waveguide 505 in the three waveguides 505 is $(1+2*x)*\pi$, and x=[1, 2, 3, 4, 5, 6, 7, 8, 9, 10, 11]. Therefore, the optical signal with the wavelength of $\lambda 1$ in the third optical signal generated by each of the 11 phase shift structures 506 implements constructive interference in the 1st waveguide 505 in the three waveguides 505. A 1st fourth optical signal is generated, and light intensity of the 1st fourth optical signal is a first predetermined value. The fourth optical signal is specifically an optical signal with a wavelength of $\lambda 1$. The 1st waveguide 505 in the three waveguides 505 outputs the 1st fourth optical signal. For example, when the optical signal with the wavelength of $\lambda 1$ in the third optical signal arrives at the 2nd waveguide 505 in the three waveguides 505, a value of a generated phase difference $\Delta\varphi_{(\lambda 1-2)}$ is not equal to $\Delta\varphi_{(\lambda 1-1)}$, so that a phase difference between optical signals with wavelengths of $\lambda 1$ in the third optical signals generated by different phase shift structures 506 is not an integer multiple of $2\pi$ when the optical signals with the wavelengths of $\lambda1$ are transmitted to the 1st waveguide 505 in the three waveguides 505. Refer to FIG. 13. A phase that is of an optical signal with a wavelength of $\lambda1$ in the third optical signal freely transmitted by the $x^{th}$ phase shift structure 506 in the 11 phase shift structures 506 to the 2nd waveguide 505 in the three waveguides 505 through the coupler 504 and that is at the 2nd waveguide 505 in the three waveguides 505 is $((11*(x - 1))/5)*\pi$, and x=[1, 2, 3, 4, 5, 6, 7, 8, 9, 10, 11]. A phase difference between optical signals with wavelengths of $\lambda1$ in the third optical signals generated by different phase shift structures 506 is not an integer multiple of $2\pi$ when the optical signals with the wavelengths of $\lambda1$ are transmitted to the 2nd waveguide 505 in the three waveguides 505. Therefore, the optical signal with the wavelength of $\lambda1$ in the third optical signal generated by each of the 11 phase shift structures 506 implements destructive interference in the 2nd waveguide 505 in the three waveguides 505. Similarly, the optical signal with the wavelength of $\lambda1$ in the third optical signal generated by each of the 11 phase shift structures 506 implements destructive interference in the 3rd waveguide 505 in the three waveguides 505.

When an optical signal with a wavelength of $\lambda2$ in the third optical signal generated by each of the 11 phase shift structures 506 is freely transmitted from each phase shift structure 506 to the 2nd waveguide 505 in the three waveguides 505 through the coupler 504, optical paths are the same, so that phases of optical signals with wavelengths of $\lambda2$ in third optical signals generated by different phase shift structures 506 are the same when the optical signals with the wavelengths of $\lambda2$ are transmitted to the 2nd waveguide 505 in the three waveguides 505. Refer to a formula $\Phi_i = \varphi_{(\lambda2\text{-}1)} + \varphi_{(\lambda2\text{-}2)} + \varphi_{(\lambda2\text{-}3)} + i2m\pi$. $\varphi_{(\lambda2\text{-}3)}$ is a phase generated when the optical signal with the wavelength of $\lambda2$ in the third optical signal arrives at the 2nd waveguide 505 in the three waveguides 505. It can be learned that a phase difference between optical signals with wavelengths of $\lambda2$ in the third optical signals generated by different phase shift structures 506 is exactly an integer multiple of $2\pi$ when the optical signals with the wavelengths of $\lambda2$ are transmitted to the 2nd waveguide 505 in the three waveguides 505. Refer to FIG. 12. A phase that is of an optical signal with a wavelength of $\lambda2$ in the third optical signal freely transmitted by the $x^{th}$ phase shift structure 506 in the 11 phase shift structures 506 to the 2nd waveguide 505 in the three waveguides 505 through the coupler 504 and that is at the 2nd waveguide 505 in the three waveguides 505 is $(1+2*x)*\pi$, and x=[1, 2, 3, 4, 5, 6, 7, 8, 9, 10, 11]. Therefore, the optical signal with the wavelength of $\lambda2$ in the third optical signal generated by each of the 11 phase shift structures 506 implements constructive interference in the 2nd waveguide 505 in the three waveguides 505. A 2nd fourth optical signal is generated, and light intensity of the 2nd fourth optical signal is also the first predetermined value. The fourth optical signal is specifically an optical signal with a wavelength of $\lambda2$. The 2nd waveguide 505 in the three waveguides 505 outputs the 2nd fourth optical signal. When an optical signal with a wavelength of $\lambda2$ in the third optical signal generated by each of the 11 phase shift structures 506 is freely transmitted from each phase shift structure 506 to the 1st waveguide 505 in the three waveguides 505 through the coupler 504, optical paths are different, so that phases of optical signals with wavelengths of $\lambda2$ in third optical signals generated by different phase shift structures 506 are also different when the optical signals with the wavelengths of $\lambda2$ are transmitted to the 1st waveguide 505 in the three waveguides 505. Refer to a formula $L_i = l + i^* \Delta l_2$ and a formula $\Phi_i = \varphi_{(\lambda2\text{-}1)} + \varphi_{(\lambda2\text{-}2)} + \varphi_{(\lambda2\text{-}3)} + i^* (2m\pi + \Delta\varphi_{(\lambda2)})$. When an optical signal with a wavelength of $\lambda2$ in the third optical signal is transmitted to the 1st waveguide 505 in the three waveguides 505, a phase difference $\Delta\varphi_{(\lambda2)}$ is generated, so that a phase difference between optical signals with wavelengths of $\lambda2$ in the third optical signals generated by different phase shift structures 506 is not an integer multiple of $2\pi$ when the optical signals with the wavelengths of $\lambda2$ are transmitted to the 1st waveguide 505 in the three waveguides 505. Refer to FIG. 13. For example, a phase that is of an optical signal with a wavelength of $\lambda2$ in the third optical signal freely transmitted by the $x^{th}$ phase shift structure 506 in the 11 phase shift structures 506 to the 1st waveguide 505 in the three waveguides 505 through the coupler 504 and that is at the 1st waveguide 505 in the three waveguides 505 is $((11*(x - 1))/5)*\pi$, and x=[1, 2, 3, 4, 5, 6, 7, 8, 9, 10, 11]. Therefore, the optical signal with the wavelength of $\lambda2$ in the third optical signal generated by each of the 11 phase shift structures 506 implements destructive interference in the 1st waveguide 505 in the three waveguides 505. Similarly, the optical signal with the wavelength of $\lambda2$ in the third optical signal generated by each of the 11 phase shift structures 506 also implements destructive interference in the 3rd waveguide 505 in the three waveguides 505.

When an optical signal with a wavelength of $\lambda3$ in the third optical signal generated by each of the 11 phase shift structures 506 is freely transmitted from each phase shift structure 506 to the 3rd waveguide 505 in the three waveguides 505 through the coupler 504, optical paths are different, so that phases of optical signals with wavelengths of $\lambda3$ in third optical signals generated by different phase shift structures 506 are also different when the optical signals with the wavelengths of $\lambda3$ are transmitted to the 3rd waveguide 505 in the three waveguides 505. Refer to a formula $L_i = l + i^* \Delta l_2$ and a formula $\Phi_i = \varphi_{(\lambda3\text{-}1)} + \varphi_{(\lambda3\text{-}2)} + \varphi_{(\lambda3\text{-}3)} + i^* (2m\pi - \Delta\varphi_{(\lambda3)} + \Delta\varphi_{(\lambda3)})$. $L_i$ is a length from the $i^{th}$ waveguide 503 in the 11 waveguides 503 to one waveguide 505. $l$ is a length from the central waveguide in the plurality of waveguides 503 to the waveguide 505. $\varphi_{(\lambda3\text{-}3)}$ is a phase generated when the optical signal with the wavelength of $\lambda3$ in the third optical signal arrives at the 3rd waveguide 505 in the three waveguides 505. Lengths from the central waveguide in the plurality of waveguides 503 to all of the waveguides 505 are the same. An offset $\Delta l_2$ is generated when non-central waveguides in the plurality of waveguides 503 arrive at different waveguides 505, and therefore, a phase difference $\Delta\varphi_{(\lambda 3-2)}$ is generated. When the optical signal with the wavelength of $\lambda 3$ in the third optical signal arrives at the 3rd waveguide 505 in the three waveguides 505, a value of a generated phase difference $\Delta\varphi_{(\lambda 1-2)}$ is equal to $\Delta\varphi_{(\lambda 1-1)}$, so that a phase difference between optical signals with wavelengths of $\lambda 3$ in the third optical signals generated by different phase shift structures 506 is exactly an integer multiple of $2\pi$ when the optical signals with the wavelengths of $\lambda 3$ are transmitted to the 3rd waveguide 505 in the three waveguides 505. Refer to FIG. 12. For example, a phase that is of an optical signal with a wavelength of $\lambda 3$ in the third optical signal freely transmitted by the $x^{th}$ phase shift structure 506 in the 11 phase shift structures 506 to the 3rd waveguide 505 in the three waveguides 505 through the coupler 504 and that is at the 3rd waveguide 505 in the three waveguides 505 is $(1+2*x)\pi$, and x=[1, 2, 3, 4, 5, 6, 7, 8, 9, 10, 11]. Therefore, the optical signal with the wavelength of $\lambda 3$ in the third optical signal generated by each of the 11 phase shift structures 506 implements constructive interference in the 3rd waveguide 505 in the three waveguides 505. A 3rd fourth optical signal is generated. The fourth optical signal is specifically an optical signal with a wavelength of $\lambda 3$, and light intensity of the fourth optical signal is the first predetermined value. The 3rd waveguide 505 in the three waveguides 505 outputs the 3rd fourth optical signal. Refer to FIG. 13. For example, when the optical signal with the wavelength of $\lambda 3$ in the third optical signal arrives at the 1st waveguide 505 in the three waveguides 505, a value of a generated phase difference $\Delta\varphi_{(\lambda 3-2)}$ is not equal to $\Delta\varphi_{(\lambda 3-1)}$, so that a phase difference between optical signals with wavelengths of $\lambda 3$ in the third optical signals generated by different phase shift structures 506 is not an integer multiple of $2\pi$ when the optical signals with the wavelengths of $\lambda 3$ are transmitted to the 1st waveguide 505 in the three waveguides 505. Refer to FIG. 13. A phase that is of an optical signal with a wavelength of $\lambda 3$ in the third optical signal freely transmitted by the $x^{th}$ phase shift structure 506 in the 11 phase shift structures 506 to the 1st waveguide 505 in the three waveguides 505 through the coupler 504 and that is at the 1st waveguide 505 in the three waveguides 505 is $((11*(x-1))/5)*\pi$, and x=[1, 2, 3, 4, 5, 6, 7, 8, 9, 10, 11]. A phase difference between optical signals with wavelengths of $\lambda 3$ in the third optical signals generated by different phase shift structures 506 is not an integer multiple of $2\pi$ when the optical signals with the wavelength of $\lambda 3$ are transmitted to the 1st waveguide 505 in the three waveguides 505. Therefore, the optical signal with the wavelength of $\lambda 3$ in the third optical signal output by each of the 11 phase shift structures 506 implements destructive interference in the 1st waveguide 505 in the three waveguides 505. Similarly, the optical signal with the wavelength of $\lambda 3$ in the third optical signal output by each of the 11 phase shift structures 506 implements destructive interference in the 2nd waveguide 505 in the three waveguides 505.

For example, the phase shift structure is disposed between the waveguide 503 and the coupler 504, or the phase shift structure 506 is disposed in the coupler 504. This does not affect constructive interference and destructive interference of an optical signal with a predetermined wavelength transmitted to the waveguide 505.

For example, in the arrayed waveguide grating 50, the waveguide 501 is configured to transmit the first optical signal to the coupler 502. For example, the first optical signal includes an optical signal with a wavelength of $\lambda 1$, an optical signal with a wavelength of $\lambda 2$, and an optical signal with a wavelength of $\lambda 3$. The coupler 502 generates k second optical signals based on the first optical signal, and couples one second optical signal into one waveguide 503 for transmission. The second optical signal also includes an optical signal with a wavelength of $\lambda 1$, an optical signal with a wavelength of $\lambda 2$, and an optical signal with a wavelength of $\lambda 3$. The waveguide 503 is configured to transmit the second optical signal to the phase shift structure 506. The phase shift structure 506 is configured to change an amplitude of one or more optical signals with wavelengths in the second optical signal, to generate the third optical signal. For example, a relationship between divergence field distribution and a divergence angle of the second optical signal is Gaussian distribution, and an amplitude decreases smoothly outward from the center. For example, an amplitude of the optical signal with the wavelength of $\lambda 1$ in the second optical signal and an amplitude of the optical signal with the wavelength of $\lambda 3$ in the second optical signal are small, and an amplitude of the optical signal with the wavelength of $\lambda 2$ (a central wavelength) in the second optical signal is large. The phase shift structure 506 may change the amplitude of the optical signal with the wavelength of $\lambda 1$ in the second optical signal and the amplitude of the optical signal with the wavelength of $\lambda 3$ in the second optical signal. For example, specifically, the phase shift structure 506 may adjust the amplitude of the optical signal with the wavelength of $\lambda 1$ in the second optical signal and the amplitude of the optical signal with the wavelength of $\lambda 3$ in the second optical signal by adjusting a phase of the second optical signal, to generate the third optical signal. An amplitude of an optical signal with a wavelength of $\lambda 1$ in the third optical signal is greater than the amplitude of the optical signal with the wavelength of $\lambda 1$ in the second optical signal. An amplitude of an optical signal with a wavelength of $\lambda 3$ in the third optical signal is greater than the amplitude of the optical signal with the wavelength of $\lambda 3$ in the second optical signal. The phase shift structure 506 transmits the third optical signal to the coupler 504. The coupler 504 generates n fourth optical signals based on the third optical signal. For example, the n fourth optical signals include one fourth optical signal with wavelengths of $\lambda 1$, one fourth optical signal with wavelengths of $\lambda 2$, and one

fourth optical signal with wavelengths of λ3. The coupler 504 couples one fourth optical signal into one waveguide 505 for transmission. The waveguide 505 outputs one fourth optical signal. Light intensity of the fourth optical signal output by the waveguide 505 is positively correlated with a square of an amplitude of the fourth optical signal output by the waveguide 505. The light intensity of the fourth optical signal output by the waveguide 505 is negatively correlated with an insertion loss of the waveguide 505. When the amplitude of the optical signal with the wavelength of λ1 in the third optical signal is greater than the amplitude of the optical signal with the wavelength of λ1 in the second optical signal, an amplitude of the fourth optical signal with the wavelengths of λ1 that is generated based on the third optical signal increases. Therefore, the insertion loss of the waveguide 505 that outputs the fourth optical signal with the wavelength of λ1 decreases. When the amplitude of the optical signal with the wavelength of λ3 in the third optical signal is greater than the amplitude of the optical signal with the wavelength of λ3 in the second optical signal, an amplitude of the fourth optical signal with the wavelengths of λ3 that is generated based on the third optical signal increases. Therefore, the insertion loss of the waveguide 505 that outputs the fourth optical signal with the wavelength of λ3 decreases.

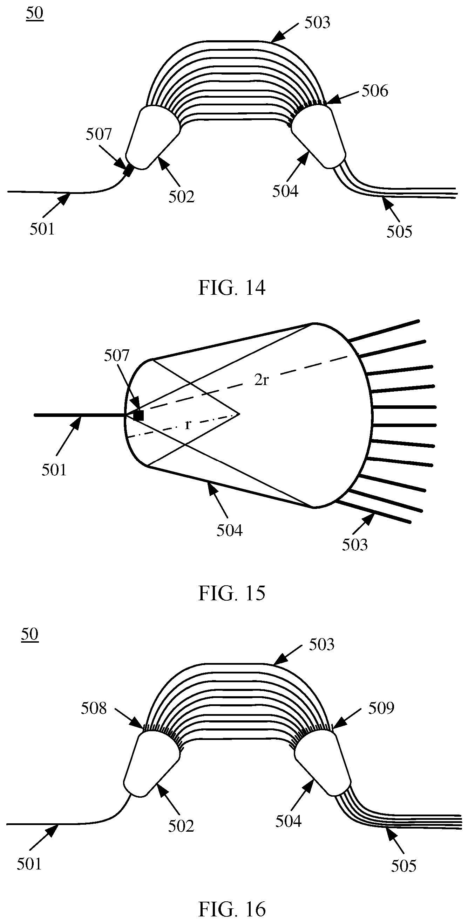

For example, refer to FIG. 14. In some embodiments, a phase shift structure 507 is further disposed between the waveguide 501 and the coupler 502. The phase shift structure 507 may alternatively be disposed in the coupler 502, so that a manufacturing process of the phase shift structure 507 is simple. The waveguide 501 is specifically configured to transmit a first optical signal to the phase shift structure 507. For example, the first optical signal includes an optical signal with a wavelength of λ1, an optical signal with a wavelength of λ2, and an optical signal with a wavelength of λ3.

The phase shift structure 507 is configured to adjust an amplitude of one or more optical signals with different wavelengths in the first optical signal, to generate a fifth optical signal. For example, refer to FIG. 9. A relationship between divergence field distribution and a divergence angle of the first optical signal is Gaussian distribution, and an amplitude decreases smoothly outward from the center. A size of the first optical signal on an xy plane is a size of a light spot of the first optical signal. For example, an amplitude of the optical signal with the wavelength of λ1 in the first optical signal and an amplitude of the optical signal with the wavelength of λ3 in the first optical signal are small, and an amplitude of the optical signal with the wavelength of λ2 (a central wavelength) in the first optical signal is large. The phase shift structure 507 may change the amplitude of the optical signal with the wavelength of λ1 in the first optical signal and the amplitude of the optical signal with the wavelength of λ3 in the second optical signal. For example, refer to FIG. 10. Specifically, the phase shift structure 507 may adjust the amplitude of the optical signal with the wavelength of λ1 in the first optical signal and the amplitude of the optical signal with the wavelength of λ3 in the second optical signal by adjusting a phase of the first optical signal, to generate a fifth optical signal. An amplitude of an optical signal with a wavelength of λ1 in the fifth optical signal is greater than the amplitude of the optical signal with the wavelength of λ1 in the first optical signal. An amplitude of an optical signal with a wavelength of λ3 in the fifth optical signal is greater than the amplitude of the optical signal with the wavelength of λ3 in the first optical signal. For example, as shown in FIG. 10, a relationship between divergence field distribution and a divergence angle of the fifth optical signal is flat-top distribution. A size of the third optical signal on the plane formed by xy is a size of a light spot of the third optical signal. For example, in a predetermined range of a predetermined radius range that is centered at a center of a light spot, a difference between amplitudes of any two optical signals with wavelengths in the fifth optical signal is less than a predetermined value, in other words, amplitudes of a plurality of optical signals with different wavelengths in the fifth optical signal are approximately equal.

The coupler 502 is specifically configured to: receive the fifth optical signal generated by the phase shift structure 507, generate k second optical signals based on the fifth optical signal, and couple one second optical signal into one waveguide 503 for transmission. Specifically, refer to FIG. 15. An embodiment of this application provides a diagram of a structure of a coupler 502. The phase shift structure 507 is specifically disposed in the coupler 502. An output end of the waveguide 501 is arranged on a circumference of a Rowland circle of the coupler 502, and input ends of 11 waveguides 503 are arranged on a circumference of a grating circle whose radius is twice a radius of the Rowland circle. The phase shift structure 507 changes an amplitude of one or more optical signals with wavelengths in the first optical signal that is transmitted by the waveguide 501 from the output end of the waveguide 501 to the coupler 502, to generate a fifth optical signal. The fifth optical signal is freely transmitted in the coupler 502. The coupler 502 generates 11 second optical signals based on the fifth optical signal. Specifically, the 11 second optical signals have equal power, and each second optical signal includes an optical signal with a wavelength of λ1, an optical signal with a wavelength of λ2, and an optical signal with a wavelength of λ3. One second optical signal is coupled into one waveguide 503 for transmission. Specifically, when the optical signal with the wavelength of λ1 in the fifth optical signal is freely transmitted in the coupler 502 to any one of the 11 waveguides 503, the optical signal with the wavelength of λ1 in the fifth optical signal has consistent optical paths and consistent phases. The phase is denoted as $\Phi_i = \varphi_{(\lambda 1-1)}$. When an optical signal with a wavelength of λ2 in the fifth optical signal is freely transmitted in the coupler 502 to any one of the 11 waveguides 503, the optical signal with the wavelength of λ2 in the fifth optical signal has consistent optical paths and consistent phases. The phase is denoted as $\Phi_i = \varphi_{(\lambda 2-1)}$. When an optical signal with a wavelength of λ3 in the fifth optical signal is freely transmitted in the coupler 502 to any one of the 11 waveguides 503, the optical signal with the wavelength of λ3 in the first optical signal has consistent optical paths and consistent phases. The phase is denoted as $\Phi_i = \varphi_{(\lambda 3-1)}$.

When the phase shift structure 507 is further disposed between the waveguide 501 and the coupler 502, the phase shift structure 507 may change an amplitude of one or more optical signals with wavelengths in the first optical signal, to generate a fifth optical signal. For example, if a relationship between divergence field distribution and a divergence angle of the fifth optical signal is flat-top distribution, a relationship between divergence field distribution and a divergence angle of the second optical signal that is generated by the coupler 502 based on the fifth optical signal is also flat-top distribution, so that insertion losses of some waveguides 505 in the arrayed waveguide grating 50 are further reduced.

For example, the phase shift structure 506 adjusts an amplitude of one or more optical signals with wavelengths in the second optical signal, to generate a third optical signal. A divergence angle of the third optical signal is equal to a corresponding central angle that is of an arc between a 1st waveguide 505 and an nth waveguide 505 and that is on the Rowland circle. Specifically, refer to FIG. 10. When the optical signal shown in FIG. 10 is specifically any third optical signal, the phase shift structure 506 may further adjust a divergence angle of the third optical signal. Refer to FIG. 10. The divergence angle is α. Refer to FIG. 11. When there are three waveguides 505, a corresponding central angle that is of an arc between a 1st waveguide 505 and a 3rd waveguide 505 and that is on the Rowland circle is β. When the divergence angle α is equal to the central angle β, it indicates that when the third optical signal is freely transmitted from the coupler 504 to the three waveguides 505, the third optical signal has no energy distributed in an area other than the three waveguides 505, so that a device insertion loss of the arrayed waveguide grating 50 can be increased.

For example, there is a solution in the conventional technology to resolve a problem that an insertion loss of one or more waveguides configured to output an optical signal in an arrayed waveguide grating is high. Refer to FIG. 16. The arrayed waveguide grating 50 shown in FIG. 16 is based on the arrayed waveguide grating 50 shown in FIG. 5. An auxiliary waveguide 508 is further disposed at an input end of a waveguide 503. When a quantity of waveguides 503 is k, a quantity of auxiliary waveguides 508 is k+1. Each of k-1 auxiliary waveguides 508 in the k+1 auxiliary waveguides 508 is disposed between two adjacent waveguides 503, one of the k+1 auxiliary waveguides is disposed on an outer side of a 1st waveguide 503, and another auxiliary waveguide in the k+1 auxiliary waveguides is disposed on an outer

side of a kth waveguide 503, to form a structure in which auxiliary waveguides 508 are disposed on two sides of the waveguide 503. In addition, input ends of the k+1 auxiliary waveguides 508 and the k waveguides 503 are arranged on a circumference of a grating circle whose radius is twice a radius of a Rowland circle. When the coupler 502 is configured to evenly couple an optical signal into 11 waveguides 503, auxiliary waveguides disposed on two sides of the waveguide 503 are also coupled with an optical signal, so that the optical signal coupled into any one of the waveguides 503 has more energy.

For example, an auxiliary waveguide 509 is further disposed at an optical signal output end of the waveguide 503. When a quantity of waveguides 503 is k, a quantity of auxiliary waveguides 509 is k+1. Each of k-1 auxiliary waveguides 509 in the k+1 auxiliary waveguides 509 is disposed between two adjacent waveguides 503, one of the k+1 auxiliary waveguides 509 is disposed on an outer side of a 1st waveguide 503, another auxiliary waveguide 509 in the k+1 auxiliary waveguides 509 is disposed on an outer side of a kth waveguide 503, to form a structure in which the auxiliary waveguides 509 are disposed on two sides of the waveguide 503. In addition, input ends of the k+1 auxiliary waveguides 508 and the k waveguides 503 are arranged on a circumference of a grating circle whose radius is twice a radius of a Rowland circle. When the waveguide 503 transmits an optical signal to the coupler 504, an optical signal transmitted in any one of the waveguides 503 is coupled into auxiliary waveguides 509 disposed on two sides of the waveguide 503. Therefore, the optical signal transmitted by any one of the waveguides 503 to the coupler 504 becomes a three-point light source (where the waveguide and the auxiliary waveguides disposed on two sides of the waveguide transmit optical signals to the coupler 504) or a multi-point light source. In this way, amplitude distribution of an optical signal transmitted by each waveguide 503 to the coupler 504 is more uniform when the optical signal diverges in the coupler 504.

However, a divergence angle of the optical signal cannot be changed by disposing the auxiliary waveguide. Therefore, in the waveguide 505 shown in FIG. 16, there is energy distributed in an area other than the n waveguides 505. As a result, an insertion loss of the arrayed waveguide grating 50 shown in FIG. 16 is high.

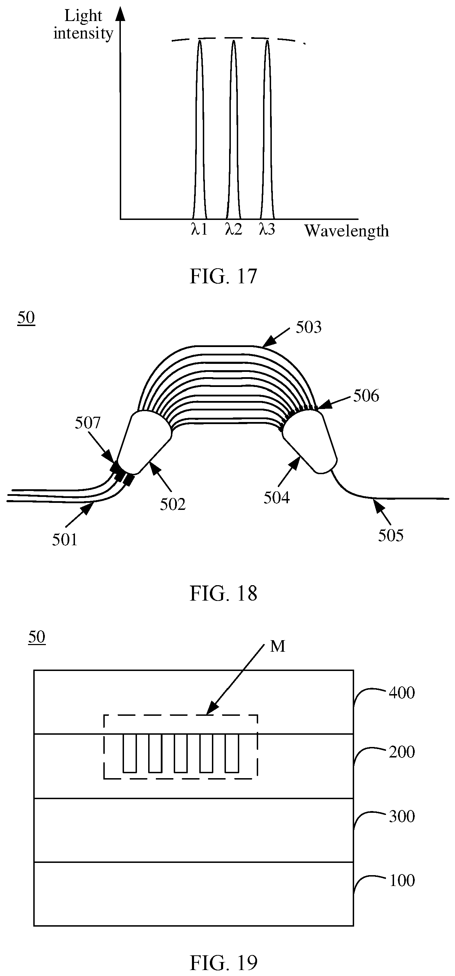

Refer to FIG. 17. When four waveguides 505 respectively output an optical signal with a wavelength of λ1, an optical signal with a wavelength of λ2, an optical signal with a wavelength of λ3, and an optical signal with a wavelength of λ4, there is energy distributed in an area other than the four waveguides 505, as shown by a dashed line in FIG. 17.

For example, in some other embodiments, refer to FIG. 18. The arrayed waveguide grating 50 may include three waveguides 501, 11 waveguides 503, and one waveguide 505. Such an arrayed waveguide grating 50 is configured to implement a function of multiplexing optical signals with different wavelengths. Such an arrayed waveguide grating may be disposed in the optical transmitting apparatus 20 shown in FIG. 2 or FIG. 3. One of the three waveguides 501 is connected to one optical modulator 202, and the waveguide 505 is connected to the optical fiber 30 shown in FIG. 1. When the arrayed waveguide grating 50 is disposed in the optical transmitting apparatus, the arrayed waveguide grating 50 may include m waveguides 501, k waveguides 503, and n waveguides 505. The optical transmitting apparatus includes s optical modulators. m is greater than n. s is less than or equal to m. Each of the three waveguides 501 is configured to receive a first optical signal with one wavelength, and wavelengths of first optical signals received by any two of the three waveguides 501 are different. The waveguide 501 is configured to transmit a first optical signal to the coupler 502. For example, a 1st waveguide 501 in the three waveguides 501 transmits a first optical signal to the coupler 502, and a wavelength of the first optical signal is λ1; a 2nd waveguide 501 in the three waveguides 501 transmits a first optical signal to the coupler 502, and a wavelength of the first optical signal is λ2; and a 3rd waveguide 501 in the three waveguides 501 transmits a first optical signal to the coupler 502, and a wavelength of the first optical signal is λ3. The coupler 502 is configured to: receive the first optical signal transmitted by the waveguide 501, generate 11 second optical signals based on the first optical signal, and couple one second optical signal into one waveguide 503 for transmission. For example, a first optical signal with a wavelength of λ1 is freely transmitted in the coupler 502, to generate 11 second optical signals with wavelengths of λ1, and one second optical signal with the wavelengths of λ1 is coupled into one of the 11 waveguides 503 for transmission. A first optical signal with a wavelength of λ2 is freely transmitted in the coupler 502, to generate 11 second optical signals with wavelengths of λ2, and one second optical signal with the wavelengths of λ2 is coupled into one of the 11 waveguides 503 for transmission. A first optical signal with a wavelength of λ3 is freely transmitted in the coupler 502, to generate 11 second optical signals with wavelengths of λ3, and one second optical signal with the wavelengths of λ3 is coupled into one of the 11 waveguides 503 for transmission. The waveguide 503 is configured to transmit the second optical signal to the phase shift structure 506. Because length differences of the 11 waveguides form an arithmetic sequence, second optical signals with different wavelengths have a predetermined phase difference after being output by the 11 waveguides 503. The phase shift structure 506 is configured to adjust an amplitude of one or more optical signals with wavelengths in the second optical signal, to generate a third optical signal. The phase shift structure 506 does not change a phase difference between second optical signals output by different waveguides 503, and only converts the second optical signal into a flat-top distributed third optical signal. Therefore, a phase difference between third optical signals output by different phase shift structures 506 is the same as the phase difference between the second optical signals output by different waveguides 503. The coupler 504 is configured to: receive the third optical signal transmitted by the phase shift structure 506, generate one fourth optical signal based on the third optical signal, and couple the fourth optical signal into the waveguide 505 for transmission. The waveguide 505 is configured to output the fourth optical signal. When only one waveguide 505 is included, all third optical signals with different wavelengths are focused on the waveguide 505, and the waveguide 505 is a central waveguide of the coupler 504. In this way, a function of multiplexing optical signals with different wavelengths by the arrayed waveguide grating 50 is implemented.

For example, the phase shift structure 506 in FIG. 18 may be further disposed in the coupler 504. For example, the phase shift structure 506 is disposed between the waveguide 503 and the coupler 504, or the phase shift structure 506 is disposed in the coupler 504. This does not affect the fourth optical signal output by the waveguide 505.

For example, in the arrayed waveguide grating 50 shown in FIG. 18, a phase shift structure 507 is further disposed between the waveguide 501 and the coupler 502. The waveguide 501 is specifically configured to transmit a first optical signal to the phase shift structure 507. The phase shift structure 507 is configured to adjust an amplitude of one or more optical signals with wavelengths in the first optical signal, to generate a fifth optical signal. The coupler 502 is specifically configured to: receive the fifth optical signal generated by the phase shift structure 507, generate k second optical signals based on the fifth optical signal, and couple one second optical signal into one second waveguide for transmission.

For example, the phase shift structure 507 in FIG. 18 may alternatively be disposed in the coupler 502. For example, the phase shift structure is disposed between the waveguide 501 and the coupler 502, or the phase shift structure 507 is disposed in the coupler 502. This does not affect the second optical signal transmitted to the waveguide 503.

For example, refer to FIG. 19. The arrayed waveguide grating 50 provided in this embodiment of this application may further include a substrate 100 (also referred to as a substrate base) and a material layer 200 disposed on the substrate. The waveguide 501, the coupler 502, the waveguide 503, the phase shift structure 506, the coupler 504, and the waveguide 505 are manufactured on the material layer 200, and the waveguide 501, the coupler 502, the waveguide 503, the phase shift structure 506, the coupler 504, and the waveguide 505 are collectively referred to as an arrayed waveguide grating pattern M. For example, a material of the substrate 100 may be lithium niobate (LiNbO3), a group III-V semiconductor compound, silicon dioxide (SiO2), silicon (Si), a polymer (Polymer), or glass. A material of the material layer 200 may be silicon (Si), silicon nitride (SiN), silicon oxynitride (SiON), or silicon dioxide. For example, the arrayed waveguide grating 50 may further include another material layer. For example, the arrayed waveguide grating may further include a protective layer 300 that is disposed on the material layer 200 and that is close to the substrate, and a protective layer 400 that is disposed on the material layer 200 and that is close to the substrate. The protective layer 300 and the protective layer 400 are configured to protect the arrayed waveguide grating pattern manufactured in the material layer 200, to prolong a service life of the arrayed waveguide grating. For example, materials of the protective layer 400 and the protective layer 300 are both silicon dioxide.

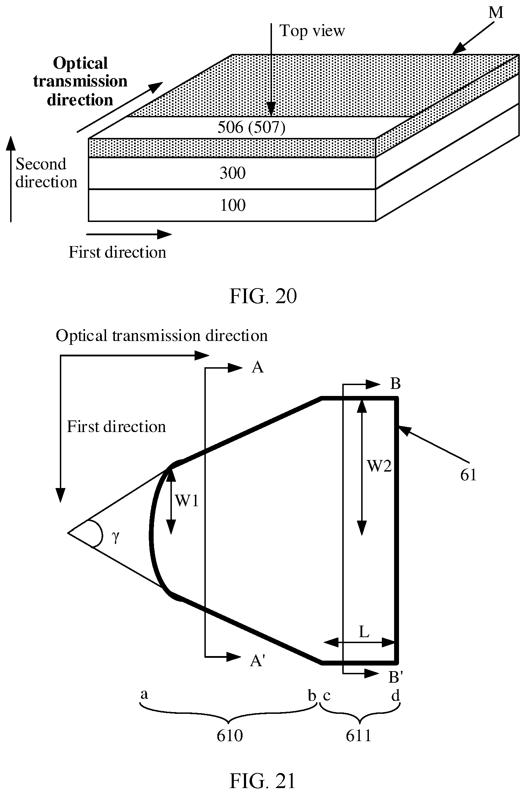

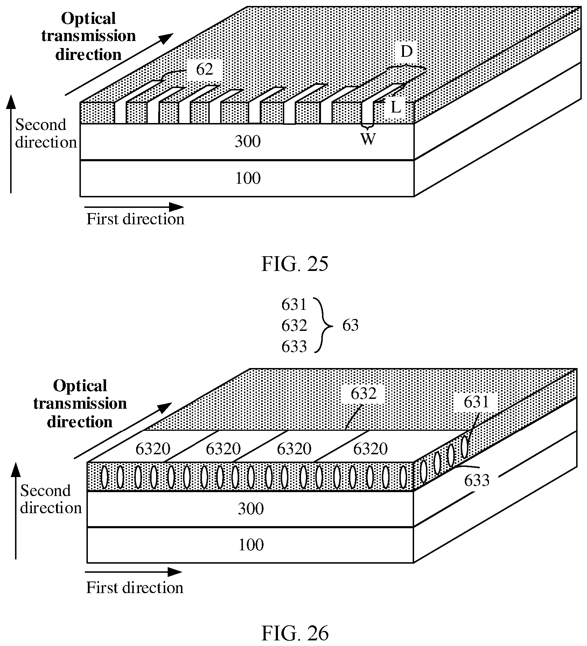

For example, the phase shift structure 506 in the arrayed waveguide grating 50 includes any one of a Powell prism 61 shown in FIG. 21, a metalens shown in FIG. 25, and a liquid crystal lens 63 shown in FIG. 26. The phase shift structure 507 includes any one of a Powell prism 61 shown in FIG. 21, a metalens shown in FIG. 25, and a liquid crystal lens 63 shown in FIG. 26.

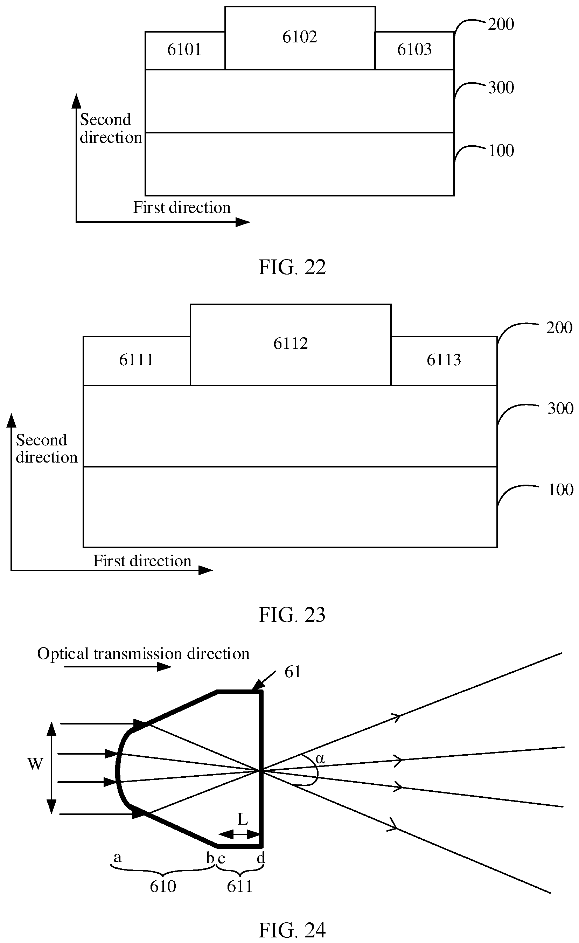

For example, when the phase shift structure 506 or the phase shift structure 507 includes the Powell prism, refer to FIG. 20. An embodiment of this application provides a diagram of the phase shift structure 506 or the phase shift structure 507 in the material layer 200. For example, refer to FIG. 21, FIG. 22, and FIG. 23. An embodiment of this application provides a diagram of a structure of a Powell prism. FIG. 22 is a sectional view along AA' in FIG. 21. FIG. 23 is a sectional view along BB' in FIG. 21. Along an optical transmission direction, the Powell prism 61 includes a first part 610 and a second part 611 that are disposed on the substrate 100. Specifically, the first part 610 and the second part 611 are disposed on the protective layer 300. Along the optical transmission direction, the first part 610 includes an end a and an end b. The end a is a convex surface, a size of the end a along a first direction is less than a size of the end b along the first direction, and the first direction is perpendicular to the optical transmission direction. Along the optical transmission direction, a size of the first part 610 continuously increases along the first direction, and an included angle between extension lines that are of the first part 610 and that are on two sides of the first direction is y. The end a is a convex surface, and a chord length of the convex surface is 2*W1. A curvature radius R of the convex surface may be obtained according to a formula

$$R = W1 * (\cos\frac{\gamma}{2})$$ . Along the optical transmission direction, the second part 611 includes an end c and an end d. A size of the end c along the first direction is equal to a size of the end d along the first direction. A size of the second part 611 along the first direction remains unchanged. Specifically, the size of the end c or the size of the end d along the first direction is 2*W2, and a size of the second part 611 along the optical transmission direction is L.

For example, when a difference between the size of the end c along the first direction and the size of the end d along the first direction is less than or equal to a predetermined value, it may also be considered that the size of the end c along the first direction is equal to the size of the end d along the first direction.

In addition, FIG. 22 is a sectional view along AA' in FIG. 21. Along the first direction, the first part 610 includes a subpart 6101, a subpart 6102, and a subpart 6103. A size of the subpart 6101 along a second direction is less than a size of the subpart 6102 along the second direction, and a size of the subpart 6103 along the second direction is less than the size of the subpart 6102 along the second direction. An equivalent refractive index of the first part 610 may be adjusted by adjusting the size of the subpart 6101 along the second direction, the size of the subpart 6102 along the second direction, and the size of the subpart 6103 along the second direction.

FIG. 23 is a sectional view along BB' in FIG. 21. Along the first direction, the second part 611 includes a subpart 6111, a subpart 6112, and a subpart 6113. A size of the subpart 6111 along the second direction is less than a size of the subpart 6112 along the second direction, and a size of the subpart 6113 along the second direction is less than the size of the subpart 6112 along the second direction. An equivalent refractive index of the second part 611 may be adjusted by adjusting the size of the subpart 6111 along the second direction, the size of the subpart 6112 along the second direction, and the size of the subpart 6113 along the second direction.

Refer to FIG. 24. The Powell prism 61 may change a divergence angle of an optical signal that passes through the Powell prism 61. Specifically, when an optical signal whose light beam width is W passes through the Powell prism 61, one or more optical signals with wavelengths in the optical signal output by the Powell prism 61 has a same amplitude. For example, a relationship between divergence field distribution and a divergence angle of the optical signal output by the Powell prism 61 is flat-top distribution, and a divergence angle of the optical signal output by the Powell prism 61 is α. The divergence angle α is negatively correlated with a curvature radius R of the convex surface of the end a of the first part 610.

When it is required that a divergence angle of the third optical signal generated by the phase shift structure 506 be equal to a corresponding central angle that is of an arc between a 1st waveguide 505 and an nth waveguide 505 and that is on a Rowland circle, and the phase shift structure 506 is specifically the Powell prism 61, the curvature radius R of the convex surface of the end a of the first part 610 of the Powell prism 61 may be adjusted, so that the divergence angle of the third optical signal passing through the Powell prism 61 is equal to the corresponding central angle that is of the arc between the 1st waveguide 505 and the nth waveguide 505 and that is on the Rowland circle.

For example, alternatively, the end c of the second part of the Powell prism 61 may not be a plane. This is not limited in this embodiment of this application.

For example, when the phase shift structure 506 or the phase shift structure 507 is a metalens, refer to FIG. 25. The metalens includes a plurality of sub-wavelength gaps 62 provided along a first direction, and two adjacent sub-wavelength gaps 62 are not in contact. A size of one sub-wavelength gap 62 along the first direction is W. A size of the sub-wavelength gap 62 along an optical transmission direction is L. A distance between a first end of a $1^{st}$ sub-wavelength gap 62 and a first end of a $2^{nd}$ sub-wavelength gap 62 in two adjacent sub-wavelength gaps 62 is D. A predetermined phase $\varphi$, specifically, according to a formula $\varphi = n k_0 L$, is generated when an optical signal is transmitted in one sub-wavelength gap 62. n is an equivalent refractive index of the sub-wavelength gap 62. $k_0 = 2\pi / \lambda$ is a free space wave vector. $\lambda$ is a wavelength of an optical signal transmitted in the sub-wavelength gap 62. L is the size L of the sub-wavelength gap 62 along the optical transmission direction. The equivalent refractive index n of the sub-wavelength gap 62 may be adjusted by adjusting the size W of the sub-wavelength gap 62 along the first direction and the distance D between the first end of the $1^{st}$ sub-wavelength gap and the first end of the $2^{nd}$ sub-wavelength gap in the two adjacent sub-wavelength gaps. Therefore, a value of the size W of each of the plurality of sub-wavelength gaps 62 shown in FIG. 25 along the first direction, a value of the size L of each of the plurality of sub-wavelength gaps 62 along the optical transmission direction, and a value of the distance D between the first end of the $1^{st}$ sub-wavelength gap and the first end of the $2^{nd}$ sub-wavelength gap in the two adjacent sub-wavelength gaps are set, so that the optical signal with one or more wavelengths in the optical signal output by the metalens has a same amplitude. For example, a relationship between divergence field distribution and a divergence angle of the optical signal output by the metalens is flat-top distribution.

When it is required that a divergence angle of the third optical signal generated by the phase shift structure 506 be equal to a corresponding central angle that is of an arc between a $1^{st}$ waveguide 505 and an $n^{th}$ waveguide 505 and that is on a Rowland circle, and the phase shift structure 506 is specifically a metalens, a value of a size W of each sub-wavelength gap 62 in the metalens along a first direction, a value of a size L along an optical transmission direction, and a value of a distance D between a first end of a $1^{st}$ sub-wavelength gap and a first end of a $2^{nd}$ sub-wavelength gap in two adjacent sub-wavelength gaps may be adjusted, so that the divergence angle of the third optical signal passing through the metalens is equal to the corresponding central angle that is of the arc between the $1^{st}$ waveguide 505 and the $n^{th}$ waveguide 505 and that is on the Rowland circle.

For example, when the phase shift structure 506 or the phase shift structure 507 is a liquid crystal lens, refer to FIG. 26. The liquid crystal lens 63 includes a liquid crystal layer 631 and an electrode 632 and an electrode 633 that are disposed on two sides of the liquid crystal layer 631 along the second direction. The liquid crystal layer 631 is disposed on the substrate 100. More specifically, the liquid crystal layer 631 is disposed on the protective layer 300, the electrode 632 is disposed on a side that is of the liquid crystal layer 631 and that is away from the substrate 100, and the electrode 633 is disposed on a side that is of the liquid crystal layer 631 and that is near the substrate 100. The electrode 632 includes a plurality of sub-electrodes 6320. A predetermined voltage is applied to the sub-electrodes 6320 and the electrode layer 633. Under an action of the predetermined voltage, liquid crystals in a part of the liquid crystal layer 631 covered by the sub-electrodes 6320 are deflected, and deflection of the liquid crystals causes a refractive index of the part of the liquid crystal layer 631 covered by the sub-electrodes 6320 to change. In this case, different voltages are applied to different sub-electrodes 6320, and a determined voltage is applied to the electrode 633, so that refractive indexes of the liquid crystal layer 631 covered by different sub-electrodes 6320 may change. Therefore, one or more optical signals with wavelengths in an optical signal output by the liquid crystal lens 63 may be adjusted to have a same amplitude by adjusting voltage values applied to different sub-electrodes 6320 shown in FIG. 26 and a voltage value applied to the electrode 633 shown in FIG. 26. For example, a relationship between divergence field distribution and a divergence angle of the optical signal output by the liquid crystal lens 63 is flat-top distribution.

When it is required that a divergence angle of the third optical signal generated by the phase shift structure 506 be equal to a corresponding central angle that is of an arc between a $1^{st}$ waveguide 505 and an $n^{th}$ waveguide 505 and that is on a Rowland circle, and the phase shift structure 506 is specifically the liquid crystal lens 63, voltage values applied to different sub-electrodes 6320 shown in FIG. 25 and a voltage value applied to the electrode 633 shown in FIG. 25 may be adjusted, so that the divergence angle of the third optical signal passing through the liquid crystal lens 63 is equal to the corresponding central angle that is of the arc between the $1^{st}$ waveguide 505 and the $n^{th}$ waveguide 505 and that is on the Rowland circle.

In some other embodiments, the electrode 633 shown in FIG. 25 may include a plurality of first sub-electrodes. A predetermined voltage is applied to the first sub-electrodes corresponding to the sub-electrodes 6320 and the sub-electrodes 6320. Under an action of the predetermined voltage, liquid crystals in a part of the liquid crystal layer 631 covered by the sub-electrodes 6320 are deflected, and deflection of the liquid crystals causes a refractive index of the part of the liquid crystal layer 631 covered by the sub-electrodes 6320 to change.

In some other embodiments, to enable the arrayed waveguide grating 50 to implement both a function of multiplexing a plurality of optical signals with different wavelengths and a function of demultiplexing a plurality of optical signals with different wavelengths in one beam of optical signals, in the arrayed waveguide grating shown in FIG. 7, a phase shift structure may be further disposed between the waveguide 503 and the coupler 502. When the waveguide 505 outputs an optical signal, the phase shift structure 506 adjusts light intensity of an optical signal output by the waveguide 505, so that an insertion loss of each waveguide 505 is low. When the waveguide 501 outputs an optical signal, a phase shift structure is disposed between the waveguide 503 and the coupler 502 to adjust light intensity of the optical signal output by the waveguide 501, so that an insertion loss of each waveguide 501 is low.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. It is clearly that a person skilled in the art can make various modifications and variations to this application without departing from the spirit and scope of this application. In this way, provided that these modifications and variations made to this application fall within the scope of the claims of this application and equivalent techniques thereof, this application is also intended to cover such modifications and variations.

## Claims

1. An arrayed waveguide grating, comprising m first waveguides, a first coupler, k second waveguides, a second coupler, and n third waveguides, wherein the first coupler is connected between the first waveguide and the second waveguide, the second coupler is connected between the second waveguide and the third waveguide, m, n, and k are all positive integers, lengths of the k second waveguides sequentially increase, and a difference between lengths of two adjacent second waveguides is a fixed value;

   a first phase shift structure is further disposed between the second waveguide and the second coupler;
   the first waveguide is configured to transmit a first optical signal to the first coupler;
   the first coupler is configured to: receive the first optical signal transmitted by the first waveguide, generate k second optical signals based on the first optical signal, and couple one second optical signal into one second waveguide for transmission;
   the second waveguide is configured to transmit the second optical signal to the first phase shift structure;
   the first phase shift structure is configured to adjust an amplitude of one or more optical signals with different wavelengths in the second optical signal, to generate a third optical signal;
   the second coupler is configured to: receive the third optical signal generated by the first phase shift structure, generate n fourth optical signals based on the third optical signal, and couple one fourth optical signal into one third waveguide for transmission; and
   the third waveguide is configured to output the fourth optical signal.

2. The arrayed waveguide grating according to claim 1, wherein

   a second phase shift structure is further disposed between the first waveguide and the first coupler;
   the first waveguide is specifically configured to transmit the first optical signal to the second phase shift structure; the second phase shift structure is configured to adjust amplitudes of a plurality of optical signals with different wavelengths in a phase of the first optical signal, to generate a fifth optical signal; and
   the first coupler is specifically configured to: receive the fifth optical signal generated by the second phase shift structure, generate k second optical signals based on the fifth optical signal, and couple one second optical signal into one second waveguide for transmission.

3. The arrayed waveguide grating according to claim 1 or 2, wherein a divergence angle of the third optical signal is equal to a corresponding central angle that is of an arc between a $1^{st}$ third waveguide and an $n^{th}$ third waveguide and that is on a Rowland circle.

4. The arrayed waveguide grating according to claim 1, wherein the first phase shift structure is disposed in the second coupler.

5. The arrayed waveguide grating according to claim 2, wherein the second phase shift structure is disposed in the first coupler.

6. The arrayed waveguide grating according to claim 1, wherein the first phase shift structure comprises any one of a Powell prism, a metalens, and a liquid crystal lens.

7. The arrayed waveguide grating according to claim 2, wherein
the second phase shift structure comprises any one of a Powell prism, a metalens, and a liquid crystal lens.

8. The arrayed waveguide grating according to claim 1, wherein
a difference between amplitudes of any two optical signals with different wavelengths in a plurality of optical signals with different wavelengths in the third optical signal is less than a predetermined value.

9. The arrayed waveguide grating according to any one of claims 1 to 8, wherein
the arrayed waveguide grating further comprises a substrate; and the m first waveguides, the first coupler, the k second waveguides, the first phase shift structure, the second coupler, and the n third waveguides are manufactured on the substrate.

10. An optical transmitting apparatus, comprising a light source, s optical modulators, and the arrayed waveguide grating according to any one of claims 1 to 9, wherein
one of the s optical modulators connects the light source and one first waveguide of the arrayed waveguide grating, wherein s is less than or equal to m, and m is greater than n.

11. An optical transmitting apparatus, comprising s light sources, s optical modulators, and the arrayed waveguide grating according to any one of claims 1 to 9, wherein
one of the s optical modulators connects one of the s light sources and one first waveguide of the arrayed waveguide grating, wherein s is less than or equal to m, and m is greater than n.

12. An optical receiving apparatus, comprising the arrayed waveguide grating according to any one of claims 1 to 9 and s optical receivers, wherein
one third waveguide of the arrayed waveguide grating is connected to one optical receiver, wherein s is less than or equal to n, and m is less than n.

13. An optical communication system, comprising the optical transmitting apparatus according to claim 10 or 11, the optical receiving apparatus according to claim 12, and an optical fiber connecting the optical transmitting apparatus and the optical receiving apparatus.

<u>10</u>

20

Optical
transmitting
apparatus

30

Optical
receiving
apparatus

40

FIG. 1

<u>20</u>

201
Light
source

202
Optical
modulator

202
Optical
modulator

202
Optical
modulator

203
AWG

FIG. 2

<u>20</u>

201
Light
source

202
Optical
modulator

201
Light
source

202
Optical
modulator

201
Light
source

202
Optical
modulator

203
AWG

FIG. 3

40

FIG. 4

50

FIG. 5

FIG. 6

FIG. 7

FIG. 8

FIG. 9

FIG. 10

FIG. 11

FIG. 12

FIG. 13

50

503

506

507

502

504

501

505

FIG. 14

507

2r

r

501

504

503

FIG. 15

50

503

508

509

502

504

501

505

FIG. 16

FIG. 17

50

503

506

507

502

504

505

501

FIG. 18

50

M

400

200

300

100

FIG. 19

Top view

M

**Optical transmission direction**

Second direction

506 (507)

300

100

First direction

FIG. 20

Optical transmission direction

First direction

A

B

W2

61

W1

γ

L

A'

B'

a

b c

d

610

611

FIG. 21

6101 | 6102 | 6103 — 200

— 300

Second direction

— 100

First direction

FIG. 22

6111 | 6112 | 6113 — 200

— 300

Second direction

— 100

First direction

FIG. 23

Optical transmission direction

61

W

L

α

a   b c   d

610   611

FIG. 24

Optical
transmission
direction

62

D

L

Second
direction

300

W

100

First direction

FIG. 25

631 ⎫
632 ⎬ 63
633 ⎭

Optical
transmission
direction

632

631

6320    6320    6320    6320

Second
direction

633

300

100

First direction

FIG. 26

## INTERNATIONAL SEARCH REPORT

| International application No. |
| --- |
| **PCT/CN2022/138066** |

### A. CLASSIFICATION OF SUBJECT MATTER

G02B6/35(2006.01)i; G02B6/34(2006.01)i; G02B6/293(2006.01)n

According to International Patent Classification (IPC) or to both national classification and IPC

### B. FIELDS SEARCHED

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

cnabs, cntxt, cnki, ven, entxt, ustxt, wotxt, web of science: 华为, 波导光栅, 阵列波导, AWG, 插损, 插入损耗, 移相, 相移, 相位调制, 相位, 振幅, arrayed waveguide grating, insert+, loss , phas+, shifting, shifter?,

### C. DOCUMENTS CONSIDERED TO BE RELEVANT

| Category* | Citation of document, with indication, where appropriate, of the relevant passages | Relevant to claim No. |
| --- | --- | --- |
| X | US 6442308 B1 (SAMSUNG ELECTRONICS CO., LTD.) 27 August 2002 (2002-08-27) description, column 3, line 50 to column 6, line 47, and figures 1-6 | 1-13 |
| X | CN 113093329 A (UNITED MICROELECTRONICS CENTER CO., LTD.) 09 July 2021 (2021-07-09) description, paragraphs 0015-0023, and figures 1-11 | 1-13 |
| A | CN 114740568 A (HUAWEI TECHNOLOGIES CO., LTD.) 12 July 2022 (2022-07-12) description, paragraphs 0052-0118, and figures 1-8 | 1-13 |
| A | US 6188818 B1 (SAMSUNG ELECTRONICS CO., LTD.) 13 February 2001 (2001-02-13) description, column 4, line 21 to column 7, line 22, and figures 1-6 | 1-13 |
| A | US 2015309258 A1 (ST MICROELECTRONICS CROLLES 2 et al.) 29 October 2015 (2015-10-29) description, paragraphs 0024-0040, and figures 1-6 | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 August 2023** | **29 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/138066**

| Patent document cited in search report | | | Publication date (day/month/year) | Patent family member(s) | | | Publication date (day/month/year) |
|---|---|---|---|---|---|---|---|
| US | 6442308 | B1 | 27 August 2002 | KR | 20000054881 | A | 05 September 2000 |
| | | | | KR | 100322133 | B1 | 04 February 2002 |
| | | | | FR | 2789182 | A1 | 04 August 2000 |
| | | | | FR | 2789182 | B1 | 03 February 2006 |
| | | | | DE | 19946936 | A1 | 24 August 2000 |
| | | | | DE | 19946936 | B4 | 05 February 2004 |
| | | | | JP | 2000221361 | A | 11 August 2000 |
| | | | | JP | 3188260 | B2 | 16 July 2001 |
| | | | | GB | 9923449 | D0 | 08 December 1999 |
| | | | | GB | 2359682 | A | 29 August 2001 |
| | | | | GB | 2359682 | B | 20 March 2002 |
| CN | 113093329 | A | 09 July 2021 | None | | | |
| CN | 114740568 | A | 12 July 2022 | None | | | |
| US | 6188818 | B1 | 13 February 2001 | DE | 19946363 | A1 | 07 December 2000 |
| | | | | KR | 20000073473 | A | 05 December 2000 |
| | | | | KR | 100293954 | B1 | 15 June 2001 |
| | | | | FR | 2793563 | A1 | 17 November 2000 |
| | | | | GB | 9923448 | D0 | 08 December 1999 |
| | | | | GB | 2349957 | A | 15 November 2000 |
| | | | | GB | 2349957 | B | 20 February 2002 |
| | | | | JP | 2000321447 | A | 24 November 2000 |
| US | 2015309258 | A1 | 29 October 2015 | US | 2017059776 | A1 | 02 March 2017 |
| | | | | US | 9778415 | B2 | 03 October 2017 |
| | | | | US | 9557487 | B2 | 31 January 2017 |

Form PCT/ISA/210 (patent family annex) (July 2022)